# EUROPEAN PATENT APPLICATION

(11) **EP 4 694 166 A1**
(43) Date of publication of application: **11.02.2026**
(21) Application number: 24847593.1
(22) Date of filing: 21.03.2024
(51) Int. Cl.: H04N 23/667

(54) **HOVER DISPLAY METHOD AND ELECTRONIC DEVICE**

(30) Priority: 28.07.2023 CN 202310954729
(71) Applicant: Honor Device Co., Ltd., Shenzhen, Guangdong 518040 (CN)
(72) Inventor: YI, Jie, Shenzhen, Guangdong 518040 (CN)
(74) Representative: Gill Jennings & Every LLP
(86) International application number: PCT/CN2024/083081
(87) International publication number: WO 2025/025627

(57) **Abstract**

A hovering display method and an electronic device are provided, relating to the field of terminal technologies. The method is applied to an electronic device including a flexible foldable screen, where the flexible foldable screen includes a first sub-screen and a second sub-screen, and the method includes: displaying, by the electronic device, a first interface on the first sub-screen when the electronic device is in a hovering state, where the first interface includes a plurality of first options, the plurality of first options include an option of a camera that is in a selected state, the first interface further includes a plurality of photographing mode controls of the camera, and each photographing mode control corresponds to one photographing mode provided by the camera; and in response to a selection operation on a first photographing mode control in the plurality of photographing mode controls, displaying, by the electronic device, a second interface on the second sub-screen, where the second interface includes a real-time preview image in a photographing mode corresponding to the first photographing mode control. In this way, man-machine interaction efficiency can be improved when the electronic device is in the hovering state.

## Description

This application claims the priority to Chinese Patent Application No. 202310954729.1, filed with the China National Intellectual Property Administration on July 28, 2023 and entitled "HOVERING DISPLAY METHOD AND ELECTRONIC DEVICE", which is incorporated herein by reference in its entirety.

### TECHNICAL FIELD

Embodiments of this application relate to the field of terminal technologies, and in particular, to a hovering display method and an electronic device.

### BACKGROUND

An electronic device having a flexible foldable screen may be used in a hovering state. The hovering state refers to a state in which the flexible foldable screen is between fully unfolded and fully folded. In the hovering state, one part formed by the flexible foldable screen through folding may be used as a support, and the other part formed by the flexible foldable screen through folding may form an angle with a support surface, for viewing by a user. In this way, two hands of the user can be free. For example, in the hovering state, there is no need to hold a mobile phone, and a video can be conveniently viewed by placing the mobile phone on a desktop.

However, in the related art, in the hovering state, it is usually difficult for the user to efficiently obtain information, and man-machine interaction efficiency is low.

### SUMMARY

In view of this, this application provides a hovering display method and an electronic device, to improve man-machine interaction efficiency when the electronic device is in a hovering state.

According to a first aspect, this application provides a hovering display method, applied to an electronic device including a flexible foldable screen, where the flexible foldable screen includes a first sub-screen and a second sub-screen. The method includes: displaying, by the electronic device, a first interface on the first sub-screen when the electronic device is in a hovering state, where the first interface includes a plurality of first options, the plurality of first options include an option of a camera that is in a selected state, the first interface further includes a plurality of photographing mode controls of the camera, and each photographing mode control corresponds to one photographing mode (such as portrait, photographing, video recording, time-lapse photographing, or night scene photographing) provided by the camera; and in response to a selection operation on a first photographing mode control in the plurality of photographing mode controls, displaying, by the electronic device, a second interface on the second sub-screen, where the second interface includes a real-time preview image in a photographing mode corresponding to the first photographing mode control.

In other words, when the option of the camera is currently selected, the electronic device may display a plurality of photographing mode controls in one-to-one correspondence with a plurality of photographing modes on the first sub-screen. In this way, it may be convenient for a user to quickly select a photographing mode in the hovering state. In addition, in response to the selection operation on the first photographing mode control in the plurality of photographing mode controls, the electronic device may display the real-time preview image in the corresponding photographing mode on the second sub-screen, that is, enter the corresponding photographing mode. In this way, the corresponding photographing mode may be quickly entered in the hovering state, to improve man-machine interaction efficiency.

In a possible design, before the displaying, by the electronic device, a first interface on the first sub-screen, the electronic device displays a third interface, where the third interface includes the plurality of first options, and the plurality of first options include an option of a multimedia playback function (such as an audio playback function or a video playback function) that is in the selected state and an option of the camera that is in an unselected state. The displaying, by the electronic device, a first interface on the first sub-screen includes: in response to a selection operation on the option of the camera in the plurality of first options, displaying, by the electronic device, the first interface on the first sub-screen.

In other words, in the hovering state, the electronic device provides options of two levels. The first level includes the plurality of first options, and each first option is used to trigger the electronic device to switch to a corresponding function, for example, switch from the multimedia playback function to the camera. The second level includes options under a corresponding function, for example, the plurality of photographing mode controls, configured to trigger the electronic device to enter a corresponding sub-function under a current function, for example, enter a photographing mode.

In comparison to a manner in which the user needs to uniformly switch between a plurality of functions and a plurality of sub-functions of each function through a swiping operation, in this implementation, selection and switching are implemented through the options of two levels, so that the user clearly switches a function and a sub-function thereof, and a trouble on an operation is not caused, to further improve the man-machine interaction efficiency in the hovering state.

In a possible design, the first angle satisfies at least one of the following conditions:

The first angle is within a first angle range. For example, if the first angle range is 90° to 120°, a condition for entering the hovering state is satisfied when an angle between a first screen and a second screen is between 90° to 120°. In this way, it may be ensured that the hovering state is entered when an angle between the first sub-screen and the second sub-screen is in a proper range, to improve use experience in the hovering state.

In addition, when the first angle is an angle at which stay duration exceeds first duration, the condition for entering the hovering state is satisfied. It may be understood that, if the first sub-screen and the second sub-screen remain at an angle for a relatively long time, it indicates that the user most probably hopes to enter the hovering state. In this case, it is determined that the condition for entering the hovering state is satisfied. In this way, an accurate occasion of entering the hovering state can be improved.

In another possible design, when the electronic device is in a landscape state, the electronic device enters the hovering state.

An upper screen and a lower screen may be formed by folding or unfolding in the landscape state. A left screen and a right screen may be formed by folding or unfolding in a portrait state. In addition, the hovering state is in a form of the upper screen and the lower screen that are formed by folding in the landscape state. Therefore, in this design, the condition for entering the hovering state is satisfied when folding or unfolding is performed in the landscape state. In this way, the hovering state may be entered when at least two screens that are formed by folding are consistent with the form in the hovering state; and/or
the flexible foldable screen displays a desktop, and the electronic device enters the hovering state.

It may be understood that, if the desktop is currently displayed, the electronic device is unlocked, and an intention of the user to use the electronic device is not obvious. Therefore, in this design, in a process in which the flexible foldable screen is folded or unfolded, the condition for entering the hovering state is satisfied, if it is detected that the desktop is currently displayed on the flexible foldable screen. In this way, the hovering state may be entered and information is pushed when the electronic device is unlocked and the intention of the user is not obvious.

In another possible design, in the process in which the flexible foldable screen is folded or unfolded, if the angle between the first sub-screen and the second sub-screen along the folding direction is a second angle, and the electronic device is in a portrait state and/or the flexible foldable screen does not display the desktop, the electronic device does not enter the hovering state. The second angle is out of the first angle range; and/or, the stay duration of the first angle does not exceed the first duration.

In other words, in a process of folding or unfolding, if the angle between the first sub-screen and the second sub-screen does not satisfy the foregoing condition for the first angle, the hovering state is not entered.

In another possible design, the electronic device displays a fourth interface on the second sub-screen when the electronic device displays the first interface on the first sub-screen and before the electronic device displays the second interface on the second sub-screen, where the fourth interface includes at least two first cards, and each first card is used for recommending a photographing mode.

In other words, when displaying the plurality of photographing mode controls on the first sub-screen, the electronic device also recommends various photographing modes on the second sub-screen through the first card, to provide a reference for the user to select the photographing mode.

In another possible design, each first card includes at least one of the following: a name of the photographing mode, a photographing effect image obtained by using the photographing mode, and a target object suitable for being photographed by using the photographing mode. In this way, clear selection reference may be provided for the user.

In another possible design, the fourth interface includes a plurality of areas, and one first card is displayed in one area of the fourth interface. In a first scene, a second card of the plurality of first cards is displayed in a first area of the plurality of areas. In a second scene, the second card is displayed in a second area of the plurality of areas, and the first area and the second area are different areas. The first scene and the second scene are different from each other in at least one of the following information: a real-time thing included in an environment in which the electronic device is located, time, a location, and a record of using the plurality of photographing modes by a user.

In other words, a display area of the first card on the second sub-screen matches one or more of the following information: a real-time thing, time, a location, and a record of using the plurality of photographing modes by the user that are included in an environment in which the electronic device is located. In this way, a focus can be on recommending a photographing mode that highly matches a current scene.

In another possible design, the real-time thing includes a thing in an environment image collected by a camera of the electronic device.

In another possible design, the plurality of first options further include options of at least one of the following functions provided by the electronic device: a gallery and sports, and each function has a plurality of sub-functions. After the displaying, by the electronic device, a first interface on the first sub-screen, the method further includes: in response to a selection operation on a second option of the plurality of first options, displaying, by the electronic device, a fifth interface on the first sub-screen, where the second option is any option of the plurality of first options other than the option of the camera, the fifth interface includes the plurality of first options, the second option is in the selected state, the fifth interface further includes a plurality of first sub-options, each first sub-option corresponds to one sub-function of a first function, and the first function is a function corresponding to the second option; and in response to a selection operation on a second sub-option of the plurality of first sub-options, displaying, by the electronic device, a sixth interface on the second sub-screen, where the sixth interface is an interface of a sub-function corresponding to the second sub-option.

In other words, in the hovering state, a gallery function and a sports function may be further flexibly switched to, and sub-functions provided by the functions may be quickly entered.

In another possible design, the second option is the option of the multimedia playback function, a plurality of sub-functions of the multimedia playback function are in one-to-one correspondence with a plurality of multimedia players in the electronic device, and interfaces of the sub-functions are interfaces of the corresponding multimedia players. In other words, in the hovering state, each multimedia player may be quickly entered.

In another possible design, the second option is the option of the gallery, a plurality of sub-functions of the gallery are in one-to-one correspondence with a plurality of images and/or albums in the gallery, and interfaces of the sub-functions are interfaces of the corresponding images and/or albums in the gallery. In other words, in the hovering state, the images and/or the albums in the gallery can be quickly viewed.

Alternatively, the second option is the option of the gallery, a plurality of sub-functions of the gallery are in one-to-one correspondence with a plurality of menu options (for example, menu options such as a photo, an album, a moment, and creation) provided by the gallery, and interfaces of the sub-functions are menu pages of the corresponding menu options. In other words, in the hovering state, a menu page of each menu in the gallery may be quickly entered.

In another possible design, the second option is the option of the sports, a plurality of sub-functions of the sports are in one-to-one correspondence with a plurality of sports courses, and interfaces of the sub-functions are interfaces of the corresponding sports courses. In other words, in the hovering state, various sports courses may be quickly viewed.

In another possible design, a selection operation on any first option (for example, the option of the camera or the second option) includes a tapping operation or a touching-and-holding operation on the option of the camera. Alternatively, the first interface includes the first area, the first area is used by the electronic device to switch a selected first option, and the selection operation on any first option includes a swiping operation in the first area. A selection operation on an option (for example, a first photographing mode control or a second sub-option) of the sub-function includes a tapping operation or a touching-and-holding operation on the option of the sub-function. In other words, an operation location of the selection operation on the first option and an operation location of the selection operation on the option of the sub-function are completely different, which is convenient for the user to distinguish. The selection operation on the option of the sub-function is performed for a sub-option, and in comparison to performing the selection operation (for example, a double-tapping operation) in the first area, the selection operation on the option of the sub-function is more intuitive.

In another possible design, in a vertical direction, a center of the first sub-screen is below a center of the second sub-screen. The displaying, by the electronic device, a first interface on the first sub-screen includes: displaying, by the electronic device, the first interface on the first sub-screen if the first sub-screen is a screen that is in the flexible foldable screen and that is at a back side of an outer screen.

In this way, a plurality of first options including the option of the camera and the option of the sub-function may be displayed on a sub-screen that is at the bottom and that has no rear-facing camera at a back side. In this way, when the rear-facing camera is not blocked, the option of the camera can be provided.

In another possible design, the electronic device displays a seventh interface on the second sub-screen if the first sub-screen is a screen that is in the flexible foldable screen and that is at a back side of a rear-facing camera and when the electronic device is in the hovering state, where the seventh interface does not include the option of the camera.

In this way, function options excluding the option of the camera and the option of the sub-function may be displayed on a sub-screen that is at the bottom but that has the rear-facing camera at the back side. In this way, when the rear-facing camera is blocked, the option of the camera is not provided.

In another possible design, the method further includes: displaying, by the electronic device, an eighth interface on the first sub-screen when the electronic device displays the second interface on the second sub-screen, where the eighth interface includes image information of an image that has been photographed by the electronic device.

Further, the second interface or the eighth interface includes a first control. The electronic device exchanges, in response to a preset operation performed by the user on the first control, display locations of the real-time preview image on the second interface and the image information of the photographed image on the eighth interface. In this way, even if a folding angle between the first sub-screen and the second sub-screen is very small, the user can view the real-time preview image on the first sub-screen.

According to a second aspect, this application provides a hovering display method, applied to an electronic device including a flexible foldable screen, where the flexible foldable screen includes a first sub-screen and a second sub-screen. The method includes: displaying, by the electronic device, a first interface on the first sub-screen when the electronic device is in a hovering state. The first interface includes a plurality of first options, the plurality of first options are in one-to-one correspondence with a plurality of functions provided by the electronic device, a second option of the plurality of first options is in a selected state, options other than the second option of the plurality of first options are in an unselected state, each function has a plurality of sub-functions, the first interface further includes a plurality of first sub-options, the plurality of first sub-options are in one-to-one correspondence with a plurality of first sub-functions, and the plurality of first sub-functions are a plurality of sub-functions of a function corresponding to the second option. The electronic device displays a second interface on the first sub-screen in response to a selection operation on a third option of the plurality of first options, where the second interface includes the plurality of first options, the third option of the plurality of first options is in the selected state, options other than the third option of the plurality of first options are in the unselected state, the second interface further includes a plurality of second sub-options, the plurality of second sub-options are in one-to-one correspondence with a plurality of second sub-functions, and the plurality of second sub-functions are a plurality of sub-functions of a function corresponding to the third option. In response to a selection operation on a third sub-option of the plurality of second sub-options, the electronic device displays a third interface on the second sub-screen, where the third interface includes an interface of a sub-function corresponding to the third sub-option.

In other words, in the hovering state, the electronic device may recommend various functions and sub-functions thereof, so that it is convenient for the user to use the various functions in the hovering state. In the hovering state, the electronic device provides the first options for the user to switch a currently selected function. In addition, the electronic device further provides a plurality of sub-options corresponding to a plurality of sub-functions of the currently selected function, for the user to switch sub-functions. In this way, it is convenient for the user to explicitly switch a function and a sub-function thereof, so that a trouble on an operation is not caused.

In another possible design, the method further includes: in response to the selection operation on the third sub-option of the plurality of second sub-options, displaying, by the electronic device, a fourth interface on the second sub-screen, where the fourth interface includes at least two first cards, and each first card is used for recommending a photographing mode.

According to a third aspect, this application further provides an electronic device, including: a display screen, a memory, and one or more processors. The memory is coupled to the processor. The memory stores computer program code, the computer program code includes computer instructions, and when the computer instructions are executed by the processor, the electronic device is enabled to perform the method according to any one of the first aspect or the second aspect or the possible designs thereof.

According to a fourth aspect, this application further provides a chip system, where the chip system is applied to an electronic device including a display screen, a processor, and a memory, the chip system includes one or more interface circuits and one or more processors, the interface circuit and the processor are interconnected through a line, the interface circuit is configured to receive a signal from the memory and send the signal to the processor, the signal includes computer instructions stored in the memory, and when the processor executes the computer instructions, the electronic device is enabled to perform the method according to any one of the first aspect or the second aspect or the possible designs thereof.

According to a fifth aspect, this application further provides a computer-readable storage medium, including computer instructions. When the computer instructions are run on an electronic device, the electronic device is enabled to perform the method according to any one of the first aspect or the second aspect or the possible designs thereof.

According to a sixth aspect, this application provides a computer program product, where when the computer program product is run on a computer, the computer is enabled to perform the method according to any one of the first aspect or the second aspect or the possible designs thereof.

It may be understood that, for beneficial effects that can be achieved by the electronic device, the chip system, the computer storage medium, and the computer program product, refer to the beneficial effects in the first aspect or the second aspect or the possible designs thereof. Details are not described herein again.

### BRIEF DESCRIPTION OF DRAWINGS

FIG. 1 is a schematic diagram 1 of a form of a display screen according to an embodiment of this application;
FIG. 2 is a schematic diagram 2 of a form of a display screen according to an embodiment of this application;
FIG. 3 is a schematic diagram of a hovering state according to an embodiment of this application;
FIG. 4 is a diagram 1 of an interface of hovering display according to an embodiment of this application;
FIG. 5 is a diagram of a hardware structure of a mobile phone according to an embodiment of this application;
FIG. 6 is a schematic diagram of forms of a landscape state and a portrait state;
FIG. 7 is a diagram 1 of a scene of triggering entering a hovering state according to an embodiment of this application;
FIG. 8 is a diagram 2 of a scene of triggering entering a hovering state according to an embodiment of this application;
FIG. 9 is a diagram 2 of an interface of hovering display according to an embodiment of this application;
FIG. 10 is a schematic diagram of a display area of a recommendation card according to an embodiment of this application;
FIG. 11 is a schematic diagram 1 of a first screen and a second screen according to an embodiment of this application;
FIG. 12 is a schematic diagram 2 of a first screen and a second screen according to an embodiment of this application;
FIG. 13 is a diagram 3 of an interface of hovering display according to an embodiment of this application;
FIG. 14 is a diagram of an interface of enabling hovering recommendation according to an embodiment of this application;
FIG. 15 is a schematic diagram of a process of displaying a recommendation card according to an embodiment of this application;
FIG. 16 is a diagram 4 of an interface of hovering display according to an embodiment of this application;
FIG. 17 is a diagram 5 of an interface of hovering display according to an embodiment of this application;
FIG. 18 is a diagram 6 of an interface of hovering display according to an embodiment of this application; and
FIG. 19 is a diagram 7 of an interface of hovering display according to an embodiment of this application.

### DESCRIPTION OF EMBODIMENTS

The following describes the technical solutions in embodiments of this application with reference to the accompanying drawings in embodiments of this application. In descriptions of embodiments of this application, terms used in the following embodiments are only intended to describe particular embodiments, and are not intended to limit this application. As used in the specification and the appended claims of this application, the singular expressions "one", "said", "the above", "the" and "this" are intended to also include such expressions as "one or more", unless otherwise clearly indicated in the context. It should be further understood that, in the following embodiments of this application, "at least one" and "one or more" mean one, two or more than two. The term "and/or" describes an association relationship between associated objects and represents that three relationships may exist. For example, A and/or B may indicate that only A exists, both A and B exist, and only B exists, where A and B may be singular or plural. A character "/" generally indicates an "or" relationship between the associated objects.

Reference to "an embodiment", "some embodiments", or the like described in the specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and variants thereof all mean "include but are not limited to", unless otherwise specifically emphasized in another manner. The term "connection" includes a direct connection and an indirect connection, unless otherwise specified. The terms "first" and "second" are merely intended for a purpose of description, and shall not be understood as indicating or implying relative significance or implicitly indicating a quantity of indicated technical features.

In the embodiments of this application, words such as "an example" or "for example" are used to represent giving an example, an illustration, or a description. Any embodiment or design solution described by using "example" or "for example" in embodiments of this application should not be explained as being more preferred or having more advantages than another embodiment or design solution. Exactly, use of the word "example", "for example", or the like is intended to present a related concept in a specific manner.

Embodiments of this application provide a hovering display method. The method is applicable to an electronic device including a flexible foldable screen. The flexible foldable screen may be configured for displaying. The flexible foldable screen refers to a foldable screen that is partially or entirely made of a flexible material. In some embodiments, a foldable part (which may be referred to as a folding edge, a folding portion, or a hinge, collectively referred to as a folding edge hereinafter) of the flexible foldable screen may be made of the flexible material, and another part of the flexible foldable screen may be made of a rigid material. The flexible foldable screen may be folded along the folding edge, and after being folded, two parts of an original screen may form an angle, to form two screens visually. In the embodiments of this application, the two parts of the flexible foldable screen may be referred to as two sub-screens (for example, a first sub-screen and a second sub-screen). In other words, the flexible foldable screen includes two sub-screens.

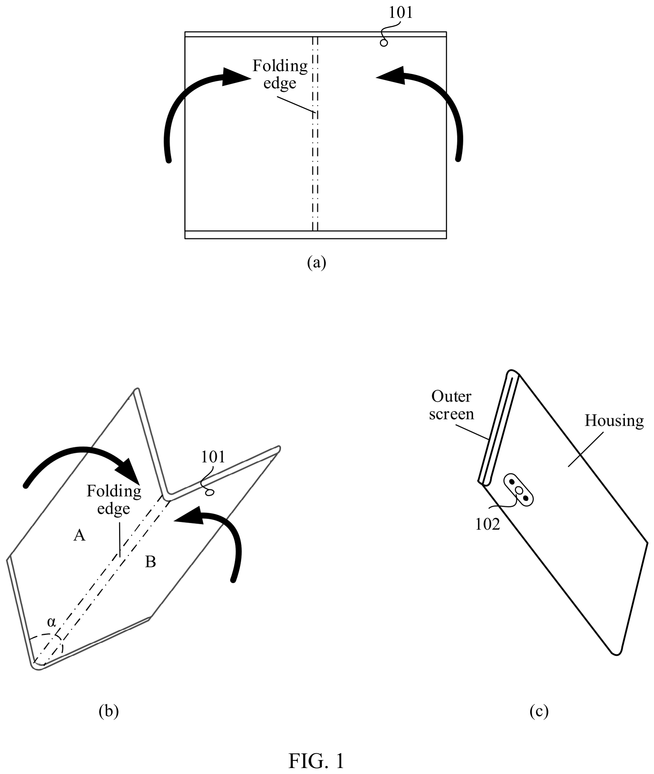

For example, the flexible foldable screen shown in (a) in FIG. 1 includes the folding edge made of the flexible material. After the flexible foldable screen is folded inward (that is, in a direction shown by an arrow in the figure) along the folding edge, a screen A and a screen B shown in (b) in FIG. 1 may be formed. Then, a state shown in (c) in FIG. 1 may be formed by further folding.

(a) in FIG. 1 is a schematic diagram of a form of the flexible foldable screen when the flexible foldable screen is in a fully unfolded state (which may be referred to as an unfolded state for short). (b) in FIG. 1 is a schematic diagram of a form of the flexible foldable screen when the flexible foldable screen is in a semi-folded state. (c) in FIG. 1 is a schematic diagram of a form of the flexible foldable screen when the flexible foldable screen is in a fully folded state (which may be referred to as a folded state for short).

It should be noted that, in the embodiments of this application, states of the flexible foldable screen include three types: an unfolded state, a folded state, and a semi-folded state. The unfolded state indicates that the flexible foldable screen is completely unfolded, that is, an angle (which is briefly referred to as a folding angle below) between two sub-screens in the flexible foldable screen along a folding direction is 180°. The folded state indicates that the flexible foldable screen is completely folded, that is, the folding angle is 0°. A state between the unfolded state and the folded state, namely, a state in which the folding angle α is within a range of (0°, 180°), is the semi-folded state.

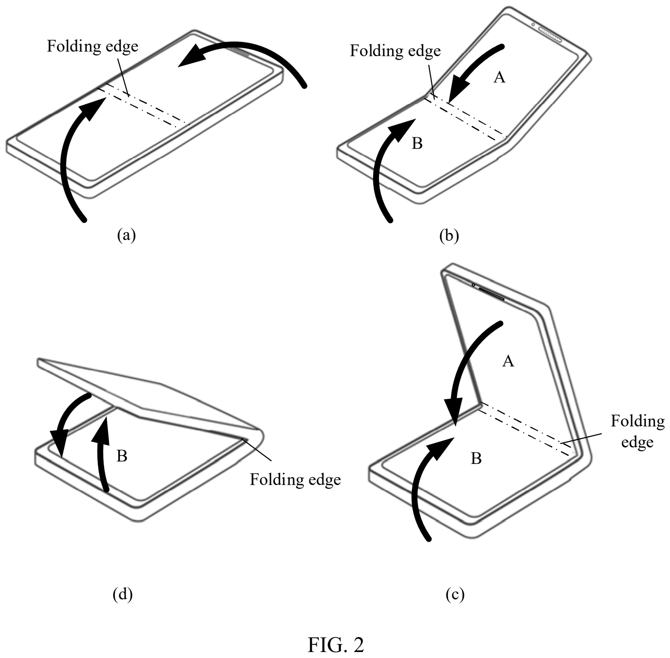

In the example in FIG. 1, the flexible foldable screen of the electronic device is vertically folded. Certainly, the flexible foldable screen of the electronic device can also be horizontally folded. For example, after the flexible foldable screen shown in (a) in FIG. 2 is folded inward (that is, in a direction shown by an arrow in the figure) along the folding edge, the screen A and the screen B shown in (b) in FIG. 2, (c) in FIG. 2, and (d) in FIG. 2 may be sequentially formed. The following mainly describes solutions of this application by using vertically folding as an example.

In the foregoing examples of FIG. 1 and FIG. 2, the flexible foldable screen of the electronic device is folded inward along the folding edge (which may be referred to as an infolding flexible screen for short). The infolding flexible screen is a flexible foldable screen whose two sub-screens (for example, the screen A and the screen B in FIG. 1 and FIG. 2) are invisible to a user after the folded state is reached.

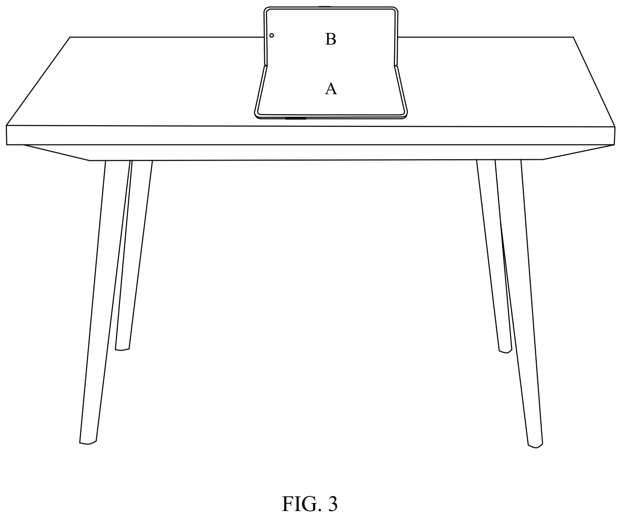

The electronic device using the infolding flexible screen may provide a use manner shown in FIG. 3: A mobile phone is fixed in the semi-folded state. If a back side of the screen A of the infolding flexible screen is used as a support surface, the screen A is provided for the user to perform operations. In addition, if the screen B and the screen A of the infolding flexible screen form an angle, the screen B may be convenient for the user to view. In this way, when the user does not need to hold the electronic device by hand, the electronic device can be conveniently used. In practice, this state of the electronic device is also referred to as a "hovering state", and correspondingly, a use function provided in this state may be referred to as a "hovering function".

In an information push manner provided in the embodiments of this application, information is pushed mainly in the "hovering state" shown in FIG. 3. Therefore, an out-folding flexible screen is not further described in this specification.

Generally, in the electronic device using the infolding flexible screen, a front-facing camera is disposed on a part of the flexible foldable screen. A rear-facing camera is disposed on a housing at a back side of the part. Still using FIG. 1 as an example, the front-facing camera is a camera 101 in (a) in FIG. 1 and (b) in FIG. 1, and the rear-facing camera is a camera 102 on a housing in (c) in FIG. 1. In addition, the electronic device using the infolding flexible screen may further include an outer screen other than the flexible foldable screen. The outer screen is disposed at a location at a back side of another part (a part on which the front-facing camera is not disposed) of the flexible foldable screen. For example, the outer screen is disposed at a location at a back side of the screen A shown in (b) in FIG. 1. When the electronic device is in the folded state, the outer screen is visible to the user. Therefore, the outer screen may be used when the electronic device is in the folded state. For example, when the electronic device is in the folded state shown in (c) in FIG. 1, the outer screen is visible to the user, and the user may view time, make a call, and the like by using the outer screen.

The hovering display method provided in the embodiments of this application may be applied to the electronic device with the infolding flexible screen. When the electronic device is in the semi-folded state and satisfies the condition for entering the hovering state, the electronic device may display, on a first screen (one of two sub-screens), a plurality of function options (which may also be referred to as a plurality of first options) and a plurality of sub-function options corresponding to a currently selected function option of the plurality of function options.

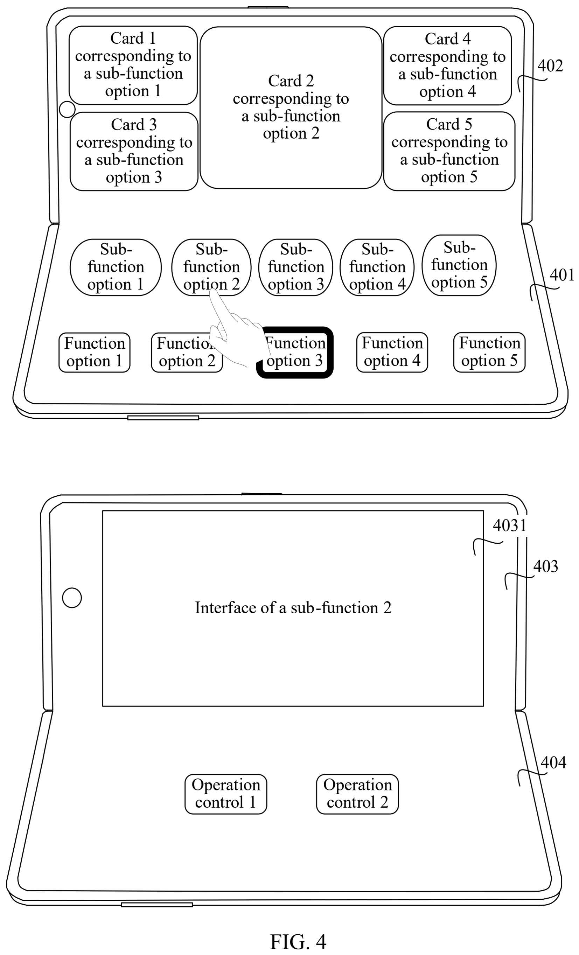

For example, the plurality of function options are a function option 1 to a function option 5 on a first screen 401 shown in FIG. 4, the currently selected function option is a function option 3 on the first screen 401, the plurality of sub-function options are a sub-function option 1 to a sub-function option 5 on the first screen 401, and the sub-function option 1 to the sub-function option 5 are options of five sub-functions of the function option 3. Each sub-function option corresponds to one sub-function, to provide a quick entry for entering various sub-functions of a corresponding function. For example, if the currently selected function option is the function option 3 on the first screen 401 shown in FIG. 4, and the function option 3 is a camera function, the sub-function option 1 to the sub-function option 5 may be in one-to-one correspondence with the following photographing modes of the camera: video recording, time-lapse photographing, night scene photographing, portrait, and multi-lens video recording.

In addition, the electronic device may further display, on a second screen (the other of the two sub-screens), a plurality of cards corresponding to the plurality of sub-function options, to recommend a corresponding sub-function through a card. For example, the plurality of cards are a card 1 to a card 5 that are in one-to-one correspondence with the sub-function option 1 to the sub-function option 5 on the second screen 402 shown in FIG. 4.

In response to a selection operation performed by the user on any one of the plurality of sub-function options, the electronic device may display, on the second screen, an interface of a sub-function corresponding to the sub-function option. For example, any sub-function option is a sub-function option 2 on the first screen 401 shown in FIG. 4. In response to a selection operation performed by the user on the sub-function option 2 on the first screen 401, the electronic device may display a second screen 403 shown in FIG. 4. The second screen 403 includes an interface 4031 of the sub-function 2. For example, the sub-function option 2 is an option corresponding to the night scene photographing mode, and the interface 4031 may include a real-time preview image obtained by using the night scene photographing mode. In this way, the electronic device may quickly present the interface of the sub-function.

Further, in response to the selection operation performed by the user on any one of the plurality of sub-function options, the electronic device may further display an operation control of the sub-function on the first screen. For example, the operation control of the sub-function may be an operation control 1 and an operation control 2 on a first screen 404 shown in FIG. 4. For example, if the interface of the sub-function includes the real-time preview image obtained by using the night scene photographing mode, the operation control 1 may be a control configured to trigger zooming, and the operation control 2 may be a control configured to trigger switching between the front-facing camera and the rear-facing camera. In this way, it may be convenient for the user to use the sub-function.

For example, the electronic device may be any device, such as a mobile phone, a tablet computer, or a laptop computer that can set the display screen as the flexible foldable screen. The following mainly describes the embodiments of this application by using an example in which the electronic device is a mobile phone.

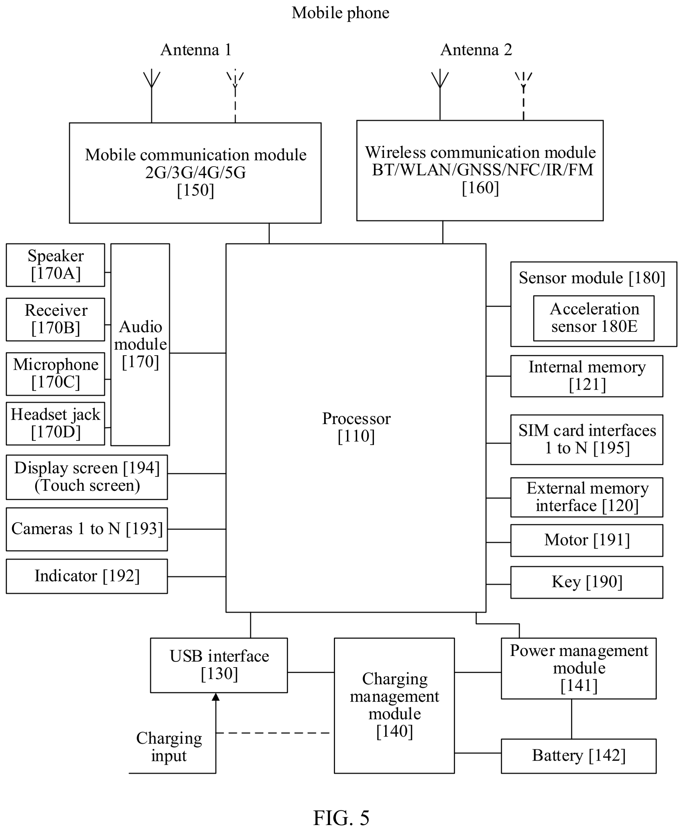

FIG. 5 is a diagram of a hardware structure of a mobile phone. As shown in FIG. 5, the mobile phone may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset interface 170D, a sensor module 180, a key 190, a motor 191, an indicator 192, cameras 1 to N 193, a display screen 194, a subscriber identity module (subscriber identity module, SIM) card interface 195, and the like.

It may be understood that, an example structure in embodiments of this application does not constitute a specific limitation on the mobile phone. In some other embodiments of this application, the mobile phone may include more or fewer components than those shown in the figure, or may combine some components, or may split some components, or may have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural processing unit (neural processing unit, NPU), and/or the like. Different processing units may be independent components, or may be integrated into one or more processors.

The processor may generate an operating control signal according to an instruction operation code and a sequence signal, to complete control of fetching and executing an instruction.

The charging management module 140 is configured to receive a charging input from a charger. The charger may be a wireless charger or a wired charger. When charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display screen 194, the cameras 1 to N 193, the wireless communication module 160, and the like.

A wireless communication function of the mobile phone may be implemented through the antenna 1, the antenna 2, the mobile communication module 150, the wireless communication module 160, the modem processor, the baseband processor, and the like.

The mobile phone may implement a display function through the GPU, the display screen 194, the application processor, and the like. The GPU is a microprocessor for image processing, and is connected to the display screen 194 and the application processor. The GPU is configured to perform mathematical and geometric calculations and to render graphics. The processor 110 may include one or more GPUs and execute program instructions to generate or change display information.

In the embodiments of this application, the display screen 194 includes an infolding flexible screen and an outer screen.

The mobile phone can implement a photographing function through cameras 1 to N 193, an ISP, a video codec, a GPU, a display screen 194, an application processor AP, a neural network processor NPU, and the like.

The mobile phone may implement an audio function through the audio module 170, the speaker 170A, the receiver 170B, the microphone 170C, the headset jack 170D, the application processor, and the like, for example, music playback, recording, and the like.

The key 190 may include a power key, a volume key, and the like. The key 190 may be a mechanical key, or may be a touch key. The mobile phone may receive a key input, and generate a key signal input related to user setting and function control of the mobile phone. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to come into contact with or be separated from the mobile phone.

The sensor module 180 further includes an acceleration sensor 180E.

The acceleration sensor 180E may detect accelerations in various directions (usually on three axes) of the electronic device 100. When the electronic device 100 is still, a magnitude and a direction of gravity may be detected. The acceleration sensor 180E may be further configured to recognize a posture of the mobile phone, and is applied to an application such as switching between landscape orientation and portrait orientation or a pedometer.

In some embodiments, the acceleration sensor 180E may be configured to detect whether the mobile phone is in a landscape state or a portrait state.

The hovering display method provided in the embodiments of this application can be performed in a mobile phone with the foregoing hardware structure.

In a process in which the flexible foldable screen of the mobile phone is unfolded from the folded state to the unfolded state (an unfolding process for short), or in a process in which the flexible foldable screen of the mobile phone is folded from the unfolded state to the folded state (a folding process for short), the mobile phone may detect whether a condition for performing a hovering state is currently satisfied. When the condition for entering the hovering state is satisfied, the mobile phone enters the hovering state, and pushes information, for example, displays various function options and sub-function options thereof.

The condition for entering the hovering state includes, but is not limited to, at least one of the following: the mobile phone is in a landscape state, the desktop is currently displayed on the flexible foldable screen, a current folding angle is in a preset angle range (which may also be referred to as a first angle range), and stay duration at a current folding angle exceeds duration 1 (which may also be referred to as first duration). Details are described below.

In some embodiments, the condition for entering the hovering state includes: the mobile phone is in the landscape state.

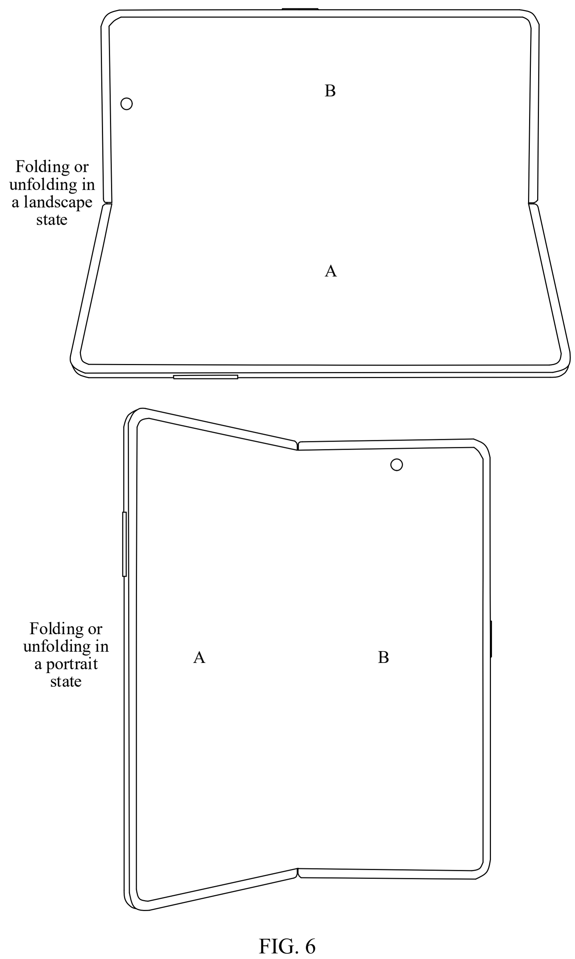

Referring to FIG. 6, an upper screen and a lower screen, such as a lower screen A and an upper screen B may be formed in a process of folding or unfolding in the landscape state. A left screen and a right screen, such as a left screen A and a right screen B may be formed in a process of folding or unfolding in a portrait state. In addition, as shown in FIG. 3, the hovering state is in a form of the upper screen and the lower screen that are formed by folding in the landscape state. Therefore, in this embodiment, the condition for entering the hovering state that is satisfied may be determined by folding or unfolding in the landscape state. In this way, the hovering state may be entered and information may be pushed when the upper screen and the lower screen are formed by folding in the landscape state.

It should be noted that, this embodiment is described above mainly by using the flexible foldable screen that is vertically folded as an example. It should be understood that, if the screen is a flexible foldable screen that is horizontally folded (as shown in FIG. 2), the condition for entering the hovering state should be replaced with a condition that the mobile phone is in the portrait state. The principle is the same as that described above, and details are not described herein again.

In some embodiments, the condition for entering the hovering state includes: the desktop is currently displayed on the flexible foldable screen.

There are mainly the following several cases of an interface displayed on the flexible foldable screen: a locked screen interface, a desktop, and an application interface.

It may be understood that, if the hovering state is entered on the locked screen interface and the information is pushed, unlocking by the user may be affected, and information leakage is very likely to be caused when excessive information is displayed in an unlocked state. If the currently displayed interface is the application interface, for example, an application interface of a chat application or an application interface of a video application, a current intention of the user is obvious. In this case, if the hovering state is entered and the information is pushed, the user is interrupted from using the current application. It can be learned that, hovering content is not suitable for being pushed on the locked screen interface and the application interface.

In addition, if the desktop is currently displayed, the mobile phone is unlocked, and the intention of the user to use the mobile phone is not obvious. Therefore, in this embodiment, in a process in which the flexible foldable screen is folded or unfolded, if it is detected that the desktop is currently displayed on the flexible foldable screen, it is determined that the condition for entering the hovering state is satisfied. In this way, the hovering state may be entered and the information may be pushed when the mobile phone is unlocked and the intention of the user is not obvious.

Generally, in a process in which the flexible foldable screen is folded, the flexible foldable screen can keep an interface displayed in the unfolded state unchanged. For example, if the flexible foldable screen displays the desktop in the unfolded state, the flexible foldable screen keeps displaying the desktop in a folding process. If the flexible foldable screen displays the application interface in the unfolded state, the flexible foldable screen keeps displaying the application interface in the folding process. If the flexible foldable screen displays the locked screen interface in the unfolded state, the flexible foldable screen keeps displaying the locked screen interface in the folding process. Therefore, in a specific implementation, when it is detected that folding starts, the interface displayed on the flexible foldable screen is detected, and if it is detected that the desktop is displayed on the flexible foldable screen, the condition for entering the hovering state is satisfied.

However, in a process in which the flexible foldable screen is unfolded, the flexible foldable screen may keep the locked screen interface unchanged, or may display the desktop or the application interface in response to the unlocking operation performed by the user. In some special cases, when the flexible foldable screen starts to be unfolded, the desktop may also be displayed. For example, the mobile phone not only includes the flexible foldable screen, but also includes an outer screen. For example, the outer screen is disposed at a back side of the screen A in FIG. 6. If in the folded state, the outer screen is not in a locked state, when the flexible foldable screen starts to be unfolded, the desktop can be displayed without unlocking the outer screen. That is, when the flexible foldable screen starts to be unfolded, the desktop is displayed. It can be learned that, at any moment at which the flexible foldable screen is unfolded, display of the desktop may be triggered. Therefore, in a specific implementation, in a process in which the flexible foldable screen is unfolded, whether the desktop is currently displayed on the flexible foldable screen needs to be detected in real time, to determine whether the condition for entering the hovering state is satisfied.

In some embodiments, the condition for entering the hovering state includes: a current folding angle is within a preset angle range.

In the hovering state, a back side of a sub-screen (for example, the screen A in FIG. 6) of the flexible foldable screen needs to be used as a support surface. It may be understood that, a larger folding angle indicates that the flexible foldable screen is closer to the unfolded state, and support stability is poor. Therefore, for the support stability, the folding angle should not be excessively large.

In addition, in the hovering state, another sub-screen (such as the screen B in FIG. 6) that is in the flexible foldable screen and that forms an angle with the support surface mainly provides content viewed by the user. In addition, an excessively small folding angle indicates that the flexible foldable screen is closer to the folded state, which may cause a case in which it is difficult for the user to view content on another sub-screen. Therefore, for ease of viewing by the user, the folding angle should not be excessively small.

Therefore, in this embodiment, when the folding angle is within a proper range (namely, the preset angle range), such as 80° to 120°, it is determined that the condition for entering the hovering state is satisfied. In this way, the hovering state can be entered and the information can be pushed when support stability and convenience of viewing by the user are ensured at the folding angle.

In some embodiments, the condition for entering the hovering state includes: the stay duration at the current folding angle exceeds the duration 1.

It may be understood that, if the flexible foldable screen is rapidly unfolded, it indicates that the intention of the user is to unfold the flexible foldable screen. On the contrary, if the flexible foldable screen is rapidly folded, it indicates that the intention of the user is to fold the flexible foldable screen. It can be learnt that, in the two cases, the user folds or unfolds the flexible foldable screen is not for entering the hovering state. On the contrary, in a process in which the flexible foldable screen is unfolded or folded, if the flexible foldable screen stays at a specific folding angle for a relatively long time (that is, exceeds the duration 1), for example, if the stay duration at 90° exceeds 0.5 second or 1 second, the user may expect to enter the hovering state. Therefore, in this embodiment, the stay duration at the current folding angle exceeds the duration 1, and the mobile phone determines that the condition for entering the hovering state is satisfied. In this way, the hovering state may be entered and the information may be pushed when the mobile phone stays at a specific folding angle.

In this case, it should be noted that, the condition for entering the hovering state in the foregoing plurality of embodiments may be combined. This is not specifically limited in the embodiments of this application.

For example, conditions for entering the hovering state include: the mobile phone is in the landscape state, the desktop is currently displayed on the flexible foldable screen, and the stay duration at the current folding angle exceeds the duration 1.

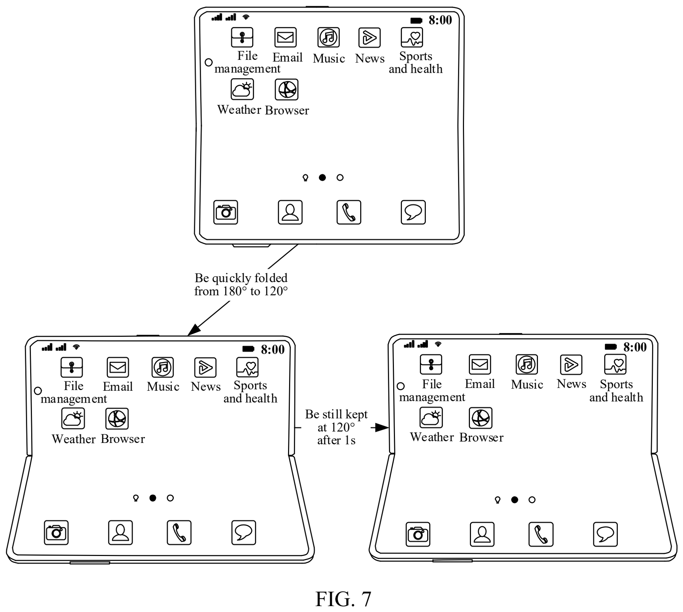

An example in which the duration 1 is 1 second is used. Referring to FIG. 7, in the unfolded state (that is, a folding angle is 180°), the flexible foldable screen displays the desktop. In the landscape state, the flexible foldable screen is quickly folded from 180° to 120°. In this process, because a folding speed is relatively fast, and the flexible foldable screen does not stay at a specific folding angle for more than 1 second, the condition for entering the hovering state is not satisfied. The flexible foldable screen is still kept at 120° after 1s, that is, the stay duration exceeds the duration 1, and the mobile phone can determine that the condition for entering the hovering state is satisfied.

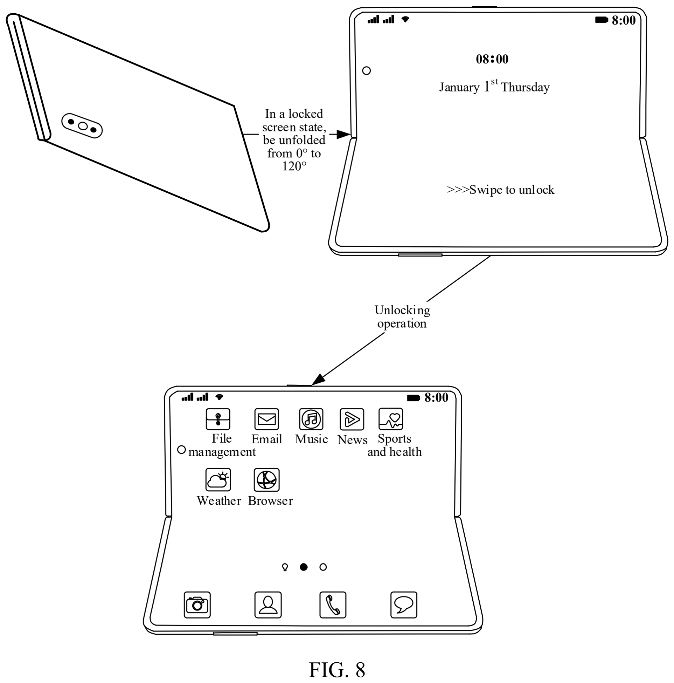

An example in which the duration 1 is 1 second is still used. Referring to FIG. 8, in the folded state (that is, the folding angle is 0°), the flexible foldable screen is in the locked screen state. In the landscape state and the locked screen state, the flexible foldable screen is unfolded from 0° to 120°. In this process, because the flexible foldable screen always displays the locked screen interface but does not display the desktop, the condition for entering the hovering state is not satisfied. Then, the mobile phone is successfully unlocked and displays the desktop in response to an unlocking operation performed by the user. It should be understood that, duration from the flexible foldable screen being at 120° to the mobile phone being successfully unlocked and displaying the desktop is generally greater than one second. Therefore, after the mobile phone is successfully unlocked and the mobile phone displays the desktop, the mobile phone may determine that the condition for entering the hovering state is satisfied.

After detecting that the condition for entering the hovering state is satisfied, the mobile phone displays a plurality of function options on the first screen. Each function option corresponds to a function provided by the mobile phone.

It may be understood that, in the hovering state, a back side of one sub-screen is used as the support surface, which can ensure that the mobile phone is in a fixed posture for a long time. Therefore, the plurality of function options may correspond to functions that need to be used when the mobile phone keeps the fixed posture. For example, jitter usually needs to be prevented when photographing is performed by using a camera, and shake needs to be avoided when a video is viewed. Therefore, a plurality of functions corresponding to the plurality of function options may include the camera and video viewing.

In addition, in the hovering state, a back side of one sub-screen is used as the support surface, and since there is no need for holding by hand by the user, two hands of the user can be free. In this case, the two hands of the user can be used for performing some complex operations. Therefore, the plurality of function options may correspond to functions that need complex operations. For example, when editing an image in the gallery, the user needs to perform relatively complex operations, and the plurality of functions corresponding to the plurality of function options may include the gallery.

Certainly, the plurality of functions corresponding to the plurality of function options may further include some other functions, for example, functions such as music listening, sports, and the like. In this specification, descriptions are mainly provided by using an example in which the plurality of functions corresponding to the plurality of function options include a total of five functions: a camera, video viewing, a gallery, sports, and music listening.

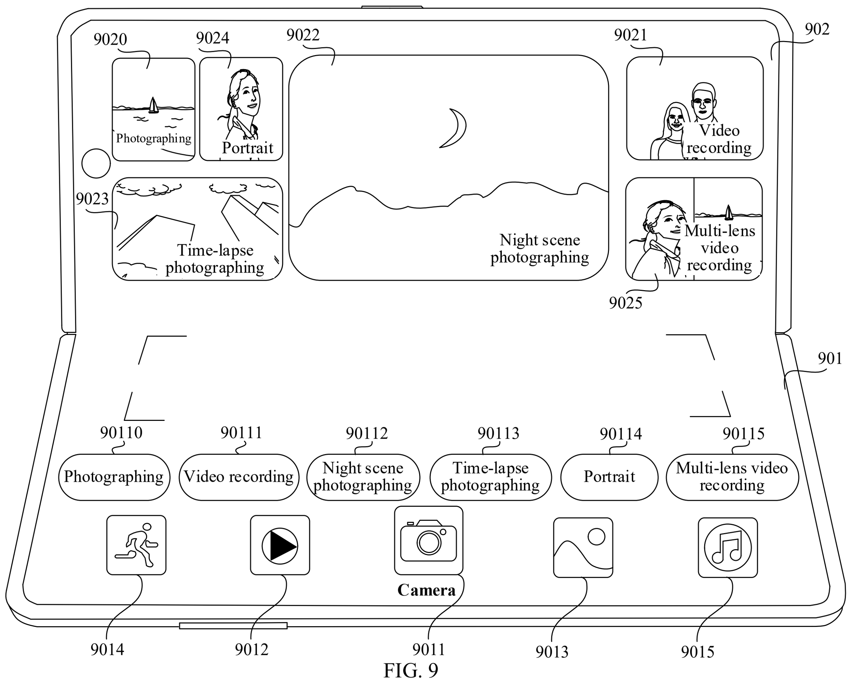

For example, after detecting that the condition for entering the hovering state is satisfied, the mobile phone may display, on the first screen 901 formed by folding shown in FIG. 9, a total of five function options: a camera 9011, video viewing 9012, a gallery 9013, sports 9014, and music listening 9015.

The mobile phone may further display a plurality of sub-function options corresponding to a currently selected function option from the plurality of function options on the first screen. The plurality of sub-function options correspond to a plurality of sub-functions, and each sub-function is a sub-function of a function corresponding to the currently selected function option. Each sub-function option may be used for triggering the mobile phone to enter a corresponding sub-function.

Still using the example in FIG. 9, the currently selected function option is the camera 9011, the camera 9011 corresponds to a total of six photographing modes: photographing 90110, video recording 90111, night scene photographing 90112, time-lapse photographing 90113, portrait 90114, and multi-lens video recording 90115, and the plurality of sub-functions may be at least two of the six photographing modes. The video recording 90111 may trigger the mobile phone to enter a video recording function of the camera. The night scene photographing 90112 may trigger the mobile phone to enter a night scene photographing function of the camera. The time-lapse photographing 90113 may trigger the mobile phone to enter a time-lapse photographing function of the camera. The portrait 90114 may trigger the mobile phone to enter a portrait photographing function of the camera. The multi-lens video recording 90115 may trigger the mobile phone to enter a multi-lens video recording function of the camera. When the multi-lens video recording function is used, a plurality of cameras may be simultaneously used to shoot a video.

It should be noted that, the plurality of sub-function options corresponding to the camera 9011 in FIG. 9 are merely exemplary, and are not limited thereto during actual implementation. Generally, the plurality of sub-function options may include all sub-function options that can be provided by a corresponding function. For example, the plurality of sub-function options corresponding to the camera 9011 may further include options of photographing modes such as a slow motion mode (not shown in the figure) and a panorama mode (not shown in the figure).

In addition, the mobile phone may further display, on the second screen, a plurality of cards in one-to-one correspondence with some or all sub-function options (which are mainly described by using all cases as an example in this specification) of the plurality of sub-function options. Each card is used for recommending a corresponding sub-function, and may provide a reference for the user to select a corresponding sub-function option.

Still using the example in FIG. 9, after detecting that the condition for entering the hovering state is satisfied, the mobile phone may further display, on the second screen 902 shown in FIG. 9, a card 9020 corresponding to the photographing 90110, a card 9021 corresponding to the video recording 90111, a card 9022 corresponding to the night scene photographing 90112, a card 9023 corresponding to the time-lapse photographing 90113, a card 9024 corresponding to the portrait 90114, and a card 9025 corresponding to the multi-lens video recording 90115. The card 9022 includes an example of scenery of a night scene and text "night scene photographing", to prompt the user of a scene in which the night scene photographing function is suitable for being used. In this way, a reference is provided for the user to select the night scene photographing 90112 on the first screen 901.

In some embodiments, card content and/or a display area of each card is determined by the mobile phone based on time, a location, and/or a behavior record of the user. In this way, a card matching current time, a current location, and/or a user behavior may be intelligently pushed.

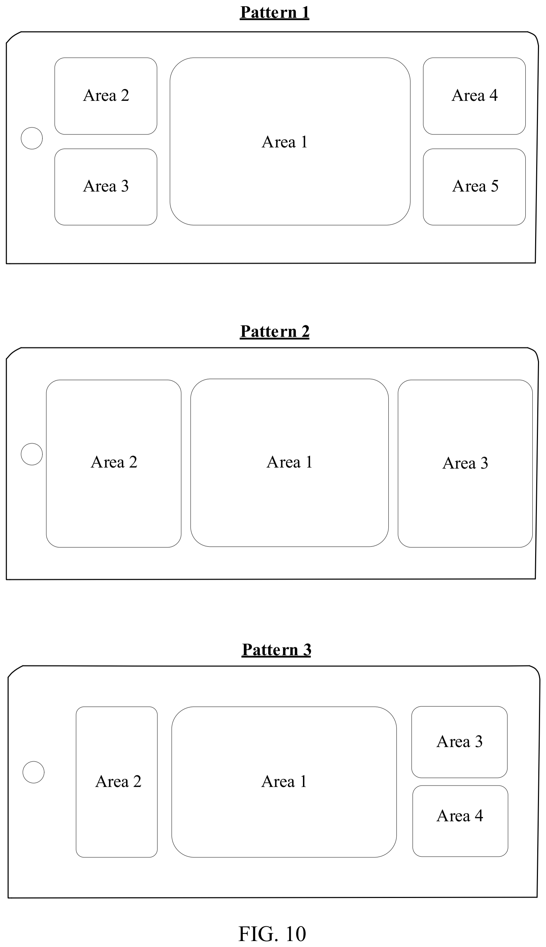

During actual implementation, the mobile phone may be preconfigured with a plurality of areas. Each area is used for displaying one card. In a specific implementation, corresponding to different function options, a plurality of areas are the same. For example, corresponding to function options such as the camera, the video viewing, and the gallery, the plurality of areas are an area 1 to an area 5 in a pattern 1 shown in FIG. 10. In another specific implementation, corresponding to different function options, a plurality of areas are different. For example, corresponding to the video viewing, the plurality of areas are an area 1 to an area 3 in a pattern 2 shown in FIG. 10; and corresponding to the gallery, the plurality of areas are an area 1 to an area 4 in a pattern 3 shown in FIG. 10. The mobile phone may be configured with the plurality of areas whose quantity is the same as that of the plurality of sub-functions included in the function option.

Subsequently, after the hovering state is entered, the mobile phone may determine, based on the time, the location, and/or the behavior record of the user, a target area for displaying the card corresponding to each sub function option in the plurality of areas, to obtain the display area of the card.

In addition, for specific implementation of determining the card content and/or the display areas for different function options, refer to the following descriptions about the various function options, and detailed descriptions are not provided herein.

The first screen and the second screen may be fixed screens on two sub-screens.

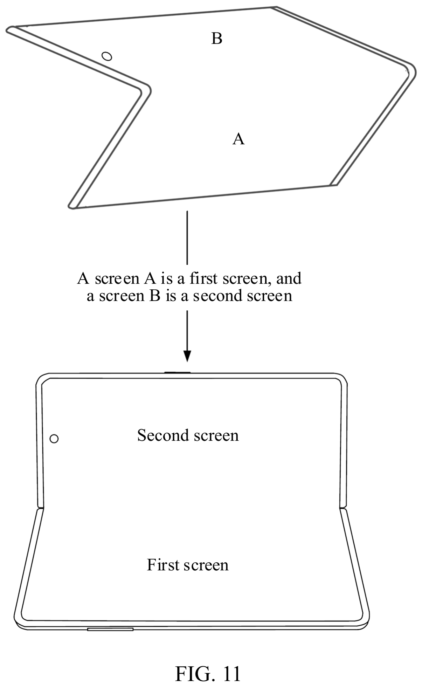

It may be understood that, the rear-facing camera has a relatively large volume, and a protrusion may be formed on the housing. Consequently, using the housing as the support surface may be unstable. For example, the rear-facing camera is disposed on a housing at a back side of a screen B shown in FIG. 11. Therefore, using the housing at the back side of the screen B as the support surface may cause instability.

Based on this, a screen at the back side of the outer screen may be determined as the first screen, and a screen at the back side of the housing may be determined as the second screen. In this way, after the user uses the outer screen as the support surface, the first screen may be convenient for the user to perform operations, and the second screen may be convenient for the user to view. For example, the screen A in FIG. 11 is used as the first screen, and the screen B is used as the second screen. In this case, after the user uses the outer screen at the back side of the screen A as the support surface, support stability can be ensured, and it can be convenient for the user to perform operations on the first screen and perform viewing on the second screen.

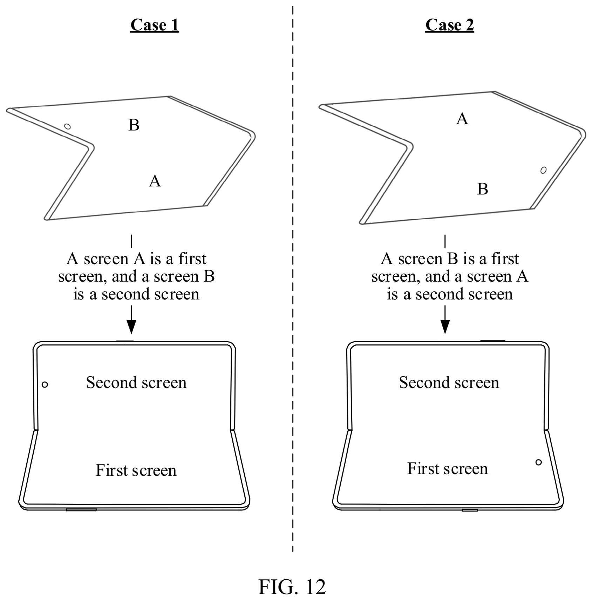

Alternatively, the first screen and the second screen are not fixed screens on the two sub-screens, but are determined according to forms that are obtained when the first screen and the second screen are folded. In a vertical direction, a center of the first screen is below a center of the second screen. For example, the semi-folded state of the mobile phone is shown in a case 1 in FIG. 12. That is, if a center of the screen A is below a center of the screen B, the screen A may be determined as the first screen, and the screen B may be determined as the second screen. For another example, the semi-folded state of the mobile phone is shown in a case 2 in FIG. 12. That is, if a center of the screen B is under a center of the screen A, the screen B may be determined as the first screen, and the screen A may be determined as the second screen. In this way, a screen whose center is lower may be used as a screen for displaying a function option and a sub-function option, and a screen whose center is upper may be used as a screen for displaying a card, so that subsequently, the user directly puts down the mobile phone without adjusting an orientation of the mobile phone to conveniently perform operations and viewing.

Further, according to this embodiment, if the determined first screen is the screen at the back side of the housing, and the first screen includes a function option and a sub-function option that need to be selected by the user, for ease of operation, the user can only use the housing as the support surface. In this case, the rear-facing camera disposed on a rear housing is blocked, and it is inconvenient to use the rear-facing camera in the hovering state. For example, the rear-facing camera is located at the back side of the screen B shown in FIG. 12. In this case, after the screen B is determined as the first screen, if the user uses the back side of the screen B as the support surface, the rear-facing camera is blocked.

Based on this, after it is detected that the condition for entering the hovering state is satisfied, different function options may be displayed on the first screen in a case of a different first screen.

For example, when the screen at the back side of the housing is used as the first screen, a plurality of first function options are displayed on the first screen, and a plurality of functions corresponding to the plurality of first function options are functions in which the camera does not need to be used. For example, the plurality of first function options may be displayed on the first screen determined in the case 2 shown in FIG. 12. In this way, when the rear-facing camera is blocked, a function in which the camera needs to be used is not provided.

For another example, when the screen at the back side of the outer screen is used as the first screen, a plurality of second function options are displayed on the first screen, and a plurality of functions corresponding to the plurality of second function options may include the function in which the camera needs to be used, such as the camera. In this way, when the rear-facing camera is not blocked, the function in which the camera needs to be used may be provided. For example, the plurality of second function options may be displayed on the first screen determined in the case 1 shown in FIG. 12. For ease of description, when the screen at the back side of the outer screen is used as the first screen, an interface including a plurality of function options and a plurality of sub-function options may be referred to as a seventh interface.

After the plurality of function options are displayed on the first screen, in response to an event of switching a function option, the mobile phone may switch a currently selected function option. Correspondingly, the plurality of sub-function options on the first screen and a plurality of cards on the second screen are also switched. In this way, it may be convenient for the user to use different functions.

The event of switching the function option may be a selection operation (for example, a tapping operation) performed by the user on any one of the plurality of function options on the first screen. Alternatively, the first screen further includes a touch area (which may also be referred to as a first area) of switching the function option. Correspondingly, the event of switching the function option may be a touch operation performed by the user in the touch area. Alternatively, the event of switching the function option may be that display duration of a current function option reaches duration 2, for example, five seconds or ten seconds. For example, after the display duration of the current function option reaches the duration 2, the mobile phone automatically switches to display an interface corresponding to another function option. This is not specifically limited in this embodiment of this application.

Descriptions are provided below mainly by using an example in which the event of switching the function option is the touch operation (for example, a swiping operation) performed by the user in the touch area on the first screen.

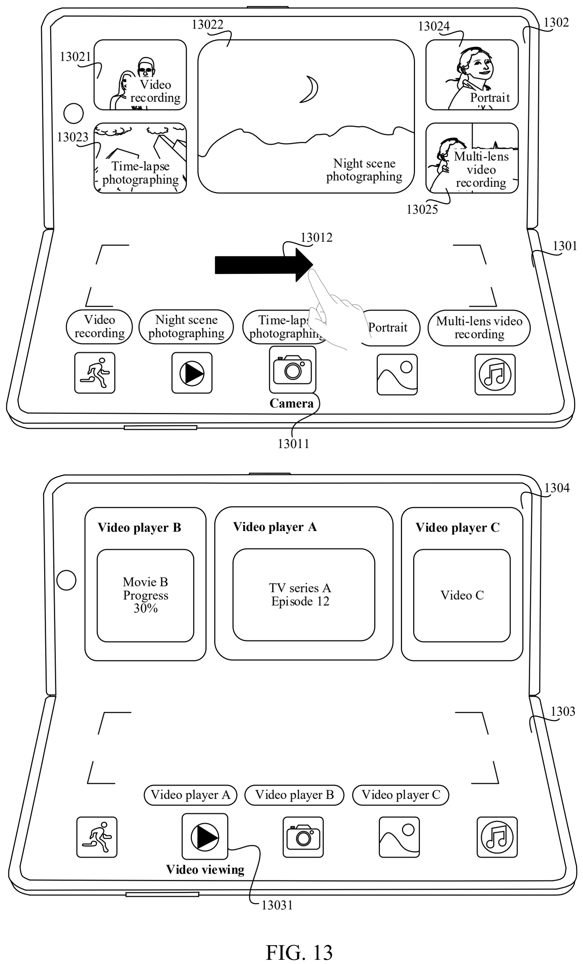

For example, after detecting that the condition for entering the hovering state is satisfied, the mobile phone may display a first screen 1301 and a second screen 1302 shown in FIG. 13. On the first screen 1301, a currently selected function option is a camera 13011. Correspondingly, the first screen 1301 further includes a plurality of sub-function options corresponding to the camera 13011, for example, a total of five sub-function options: video recording, night scene photographing, time-lapse photographing, portrait, and multi-lens video recording. In addition, the second screen 1302 includes five cards, such as a card 13021, a card 13022, a card 13023, a card 13024, and a card 13025, respectively corresponding to five sub-function options of the camera 13011. In addition, the first screen 1301 further includes a touch area 13012. In response to a left-to-right swiping operation performed by the user in the touch area 13012, the mobile phone may switch a currently selected function option from the camera 13011 to video viewing. For example, in response to the left-to-right swiping operation performed by the user in the touch area 13012, the mobile phone may display the first screen 1303 and the second screen 1304 shown in FIG. 13. Different from the first screen 1301, video viewing 13031 on the first screen 1303 is the currently selected function option, and the first screen 1303 includes a plurality of sub-function options, for example, a total of three sub-function options: a video player A, a video player B, and a video player C, corresponding to the video viewing 13031. In addition, different from the second screen 1302, the second screen 1304 includes three cards, such as a card 13041, a card 13042, and a card 13043, respectively corresponding to three sub-function options of the video 13031.

It should be understood that, different function options may be switched to if information such as a quantity of touch operations, a displacement of the touch operation, and a direction of the touch operation is different. For example, in response to the left-to-right swiping operation performed by the user in the touch area, a function option may be switched by swiping to the left. Based on this, in response to another left-to-right swiping operation performed by the user in the touch area, another function option may be switched by swiping to the left. For another example, in response to a left-to-right operation of swiping by a displacement of 1 that is performed by the user in the touch area, a function option may be switched by swiping to the left. Based on this, in response to the left-to-right operation of continuing to swipe by a displacement of 1 that is performed by the user in the touch area, another function option may be switched by swiping to the left. For another example, in response to a left-to-right swiping operation performed by the user in the touch area, a function option may be switched by swiping to the left. In response to a right-to-left swiping operation performed by the user in the touch area, a function option may be switched by swiping to the right. In other words, in FIG. 13, a process of switching the function option is described by using only an example of switching from the camera to the video viewing. However, in practice, in response to the touch operation performed by the user in the touch area, the mobile phone may be switched to any function option of the plurality of function options.

For ease of description, a function option other than the camera in the plurality of function options may be referred to as a second option. When the currently selected function option is a function option other than the camera, an interface including the plurality of function options and the plurality of sub-function options may also be referred to as a fifth interface. In addition, when the current function option is a function option other than the camera, the plurality of sub-function options may also be referred to as a plurality of first sub-options.

For the current function option, in response to a selection operation performed by the user on any one of the plurality of sub-function options, the mobile phone may display an interface of a sub-function corresponding to the sub-function option on the second screen. In this way, the mobile phone may quickly present information about the sub-function. In addition, in response to the selection operation performed by the user on any one of the plurality of sub-function options, the mobile phone may further provide an operation control of the sub-function corresponding to the sub-function option on the first screen. In this way, control on the sub-function is facilitated.

Content displayed on the first screen and the second screen and a response of the mobile phone to the selection operation performed by the user on any one of the plurality of sub-function options are described below by using a total of five function options: a camera, video viewing, a gallery, sports, and music listening.

### Function option 1: camera.

For example, when the current function option is the camera, the mobile phone may display the first screen 1301 and the second screen 1302 shown in FIG. 13. For ease of description, when the current function option is the camera, an interface including the plurality of function options and the plurality of sub-function options (for example, an interface displayed on the first screen 1301) may also be referred to as a first interface, and an interface including a plurality of cards (for example, an interface displayed on the second screen 1302) may also be referred to as a fourth interface. In addition, the plurality of sub-functions of the camera may be a plurality of photographing modes provided by the camera, such as portrait, time-lapse photographing, night scene photographing, video recording, and multi-lens video recording. In this case, when the current function option is the camera, the plurality of sub-function options (which may also be referred to as a plurality of photographing mode controls) and the plurality of cards (which may also be referred to as a plurality of first cards) are in one-to-one correspondence with the plurality of photographing modes.

The following exemplarily describes specific implementation of displaying cards corresponding to the plurality of sub-function options on the first screen in a plurality of areas of the second screen.

When the plurality of areas (for example, five areas in the pattern 1 shown in FIG. 10) for the camera are already configured in the mobile phone, the mobile phone may determine a target area for displaying cards of various sub-function options, and then display card content in the target area.

After it is detected that the condition for entering the hovering state is satisfied, or in response to switching to the current function option being the camera, the mobile phone may determine a matching degree between a current environment (for example, a real-time thing included in the current environment) and/or a behavior record 1 (for example, a record of using the plurality of photographing modes by the user) of the user in the camera (application) and each sub-function of the camera, and determine, in descending order of matching degrees, a target area for displaying a card of each sub-function option. A sub-function having a higher matching degree indicates that an area size of the target area is larger, and/or an area location is closer to a middle location of the second screen. A sub-function having a lower matching degree indicates that the area size of the target area is smaller, and/or the area location is closer to an edge location of the second screen. It may be understood that, a larger area size indicates that the area location is closer to the middle location of the second screen, and is more likely to be viewed by the user. In this way, it can be ensured that a card with a sub-function having a high matching degree can be more easily viewed by the user, thereby improving recommendation efficiency.

In some embodiments, the mobile phone may collect an environment image, and determine, according to the environment image, a matching degree between the current environment and each sub-function of the camera.

The environment image needs to be collected by using the camera (including the front-facing camera and/or the rear-facing camera) of the mobile phone. In other words, the mobile phone actively enables the camera to collect the environment image.

In a specific implementation, the mobile phone may collect the environment image by using the camera after receiving a confirming operation indicating that the user allows to actively enable the camera in the hovering state, and determine, according to the environment image, a matching degree between a current environment and each sub-function of the camera.

The mobile phone may display, on a boot wizard (namely, a guiding interface for a new device to boot for the first time), prompt information indicating whether to allow actively enabling the camera in the hovering state. Correspondingly, the confirming operation may be an operation, for example, an operation of selecting "yes", performed by the user on the prompt information. Alternatively, a setting interface of the camera (the application) in the mobile phone provides a target setting option indicating that the camera is actively enabled in the hovering state, and the confirming operation may be an enabling operation performed by the user on the target setting option. A form of the confirming operation is not specifically limited in this embodiment of this application.

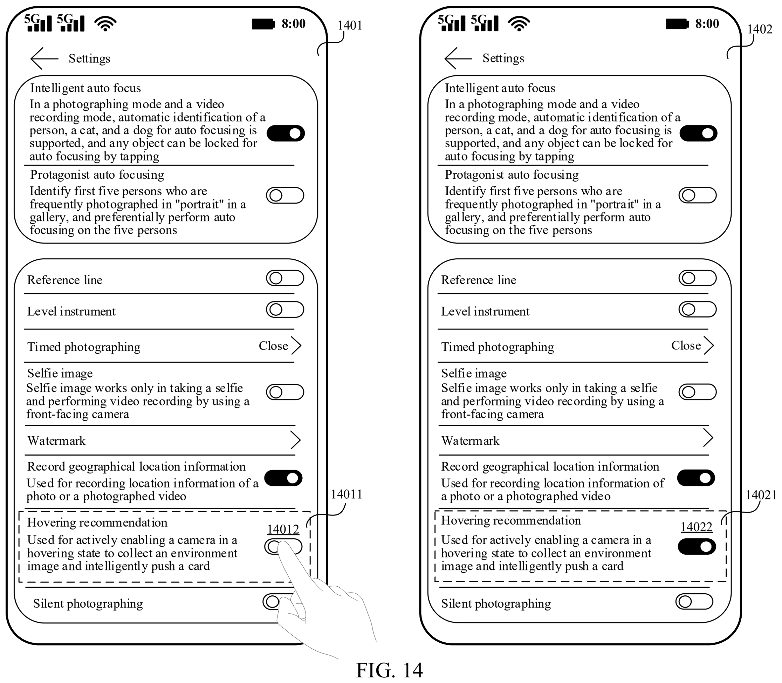

An example in which the confirming operation is the enabling operation performed by the user on the target setting option is used. The mobile phone may display an interface 1401 shown in FIG. 14, and the interface 1401 is a setting interface of the camera. The target setting option is "hovering recommendation" 14011 on the interface 1401. The hovering recommendation 14011 includes a function of the hovering recommendation, "which is used for actively enabling the camera in the hovering state to collect the environment image and intelligently push a card", thereby showing a function after the hovering recommendation 14011 is enabled. A switch 14012 in the hovering recommendation 14011 is in a turned-off state, which is used for indicating that the hovering recommendation is not enabled. In response to an enabling operation performed by the user on the switch 14012 in the hovering recommendation 14011, the mobile phone may enable the hovering recommendation. For example, an identifier of the hovering recommendation is recorded as 1, to indicate to enable the hovering recommendation. It should be understood that, after enabling the hovering recommendation, the mobile phone may display an interface 1402 shown in FIG. 14. The interface 1402 includes a switch 14022 in the hovering recommendation 14021 that is in an enabled state. Subsequently, if it is detected that the condition for entering the hovering state is satisfied, whether the hovering recommendation is enabled may be queried. If it is queried that the identifier is 1, the camera may be enabled to collect the environment image.

The mobile phone may enable only the rear-facing camera to collect the environment image, or may enable only the front-facing camera to collect the environment image, or may enable both the front-facing camera and the rear-facing camera to jointly collect the environment image. This is not specifically limited in this embodiment of this application. After enabling the camera to collect the environment image, the mobile phone may match image content in the environment image with an element that is suitable for photographing in each sub-function, to obtain a matching degree between the environment and each sub-function.

In a specific implementation, the mobile phone is configured with a correspondence between each sub-function and the element that is suitable for being photographed. For example, a correspondence between each sub-function and the element that is suitable for being photographed by using each sub-function is shown in the following Table 1:

**Table 1**

| Sub-function | Element suitable for being photographed |
|---|---|
| Time-lapse photographing | Traffic flow, cloud, pedestrian flow, sunrise, and sunset |
| Night scene photographing | Night sky and night road |
| Portrait | Person |
| Multi-lens video recording | Front-facing camera: a person; and rear-facing camera: scenery (such as sea, sunrise, and sunset), delicacy, and a landmark building |

The following lists several typical matching examples with reference to the correspondences shown in Table 1.

Example 1: The mobile phone enables the rear-facing camera to collect an environment image 1, and detects that the environment image 1 includes the traffic flow. The traffic flow is an element suitable for being photographed by using the time-lapse photographing, and it indicates that the time-lapse photographing is suitable for being used. In this case, the mobile phone may determine that a matching degree between a current environment and the time-lapse photographing is a matching degree 1, and a matching degree between the current environment and the sub-functions such as the night scene photographing, the portrait, the multi-lens video recording, and the video recording is a matching degree 2. The matching degree 1 is greater than the matching degree 2.

Example 2: The mobile phone enables the rear-facing camera to collect an environment image 2, and detects that the environment image 2 includes the night sky. The night sky is an element suitable for being photographed by using the night scene photographing, and it indicates that the night scene photographing is suitable for being used. In this case, the mobile phone may determine that a matching degree between a current environment and the night scene photographing is a matching degree 3, and a matching degree between the current environment and the sub-functions such as the time-lapse photographing, the portrait, the multi-lens video recording, and the video recording is a matching degree 4. The matching degree 3 is greater than the matching degree 4.

Example 3: The mobile phone enables the front-facing camera or the rear-facing camera to collect an environment image 3, and detects that the environment image 3 includes the person. The person is an element suitable for being photographed by using the portrait, and it indicates that the portrait is suitable for being used. In this case, the mobile phone may determine that a matching degree between a current environment and the portrait is a matching degree 5, and a matching degree between the current environment and the sub-functions such as the time-lapse photographing, the night scene photographing, the multi-lens video recording, and the video recording is a matching degree 6. The matching degree 5 is greater than the matching degree 6.

Example 4: The mobile phone enables the front-facing camera to collect an environment image 4 and enables the rear-facing camera to collect an environment image 5, and detects that the environment image 4 includes the person, and the environment image 5 includes the sea (belonging to the scenery). A combination of the person being photographed by the front-facing camera and the scenery being photographed by the rear-facing camera is an element suitable for being photographed by using the multi-lens video recording, and it indicates that the multi-lens video recording is suitable for being used. In this case, the mobile phone may determine that a matching degree between a current environment and the multi-lens video recording is a matching degree 7, and a matching degree between the current environment and the sub-functions such as the time-lapse photographing, the night scene photographing, the portrait, and the video recording is a matching degree 8. The matching degree 7 is greater than the matching degree 8.

In some other embodiments, the mobile phone obtains the matching degree between the current environment and various sub-functions of the camera based on time and/or a location.

It may be understood that, a photographing requirement of the user may be associated with the time and/or the location to some extent.

For example, the current time is a time point in a time interval 1. For example, if a preset time interval 1 is from 8 p.m. to 6 a.m. the next day, it indicates that the night scene photographing is suitable for being used. In this case, the mobile phone may determine that a matching degree between a current environment and the night scene photographing is a matching degree 1, and a matching degree between the current environment and the sub-functions such as the time-lapse photographing, the portrait, the multi-lens video recording, and the video recording is a matching degree 2. The matching degree 1 is greater than the matching degree 2.

For another example, if the current time is a weekend, and the current location is an amusement park, it indicates that video recording is suitable for being used, to record a playing process. In this case, the mobile phone may determine that a matching degree between a current environment and the video recording is a matching degree 3, and a matching degree between the current environment and the sub-functions such as the time-lapse photographing, the portrait, the multi-lens video recording, and the night scene photographing is a matching degree 4. The matching degree 3 is greater than the matching degree 4.

Further, the current environment may adapt to at least two functions to be photographed. Using Example 4 as an example, the environment image 4 includes the person, and the environment image 5 includes the sea (belonging to the scenery). A combination of the person being photographed by the front-facing camera and the scenery being photographed by the rear-facing camera is an element suitable for being photographed by using the multi-lens video recording. In addition, the person is also an element suitable for being photographed by using the front-facing camera. In other words, the current environment is not only suitable for being photographed by using the multi-lens video recording, but also suitable for being photographed by using the portrait.

For this case, the mobile phone may configure priorities for a plurality of sub-functions of the camera. In addition, in a process of determining the matching degree, if at least two sub-functions are applicable to the current environment, the mobile phone may determine the matching degree between the current environment and at least two sub-functions in an order of priorities of the at least two sub-functions. A sub-function with a higher priority in the at least two sub-functions has a higher matching degree with the current environment; and a sub-function with a lower priority has a lower matching degree with the current environment. In this way, matching degrees respectively between the at least two sub-functions applicable to the current environment and the current environment are different, to facilitate subsequently determining the target area based on the matching degrees.

Still using Example 4 as an example, the environment image 4 includes the person, and the environment image 5 includes the sea (belonging to the scenery). The current environment is not only suitable for being photographed by using the multi-lens video recording, but also suitable for being photographed by using the portrait. In this case, the mobile phone may query priorities of the multi-lens video recording and the portrait. If it is found that a priority of the multi-lens video recording is higher than a priority of the portrait, it may be determined that a matching degree between the current environment and the multi-lens video recording is a matching degree 9, a matching degree between the current environment and the portrait is a matching degree 10, and a matching degree between the current environment and the sub-functions such as the night scene photographing, the time-lapse photographing, and the video recording is a matching degree 11. The matching degree 9 is greater than the matching degree 10, and the matching degree 10 is greater than the matching degree 11.

In addition, there may be a plurality of sub-functions that are not suitable for being used in the current environment. For example, in Example 1, the current environment is suitable for being photographed by using the time-lapse photographing, but is not suitable for being photographed by using the sub-functions such as the night scene photographing, the portrait, the multi-lens video photographing, and the video recording. For this case, the mobile phone may also determine, in the order of the priorities of the plurality of sub-function options, a matching degree between the current environment and the plurality of sub-functions that are not suitable for being used. A sub-function with a higher priority in the plurality of sub-functions that are not suitable for being used has a higher matching degree with the current environment; and a sub-function with a lower priority has a lower matching degree with the current environment. In this way, matching degrees respectively between the plurality of sub-functions that are not suitable for being used in the current environment and the current environment are different, to facilitate subsequently determining the target area based on the matching degrees.

In some other embodiments, the mobile phone may determine a matching degree between the behavior record 1 of the user and each sub-function of the camera. The behavior record 1 includes a frequency of using each sub-function of the camera by the user and/or latest use time within a time interval 2 (for example, one month or one week). Each time the mobile phone detects a photographing operation performed by the user by using any sub-function of the camera, a use frequency of the sub-function is increased by one.

For example, the mobile phone may determine, in descending order of use frequencies of a plurality of sub-functions within the time interval 2, that matching degrees between the behavior record 1 and the plurality of sub-functions respectively decrease. An example in which the time interval 1 is one week is used. When it is detected that the condition for entering the hovering state is satisfied or in response to the current function option being the camera, the mobile phone may obtain a use frequency of each sub-function of the camera. For example, if a use frequency of the portrait is 10, and a use frequency of the time-lapse photographing is 6, the mobile phone may determine that a matching degree between the behavior record 1 and the portrait is a matching degree 1, and a matching degree between the behavior record 1 and the time-lapse photographing is a matching degree 2. The matching degree 1 is greater than the matching degree 2.

For another example, the mobile phone may determine, in reverse chronological order of latest use time of the plurality of sub-functions, that matching degrees between the behavior record 1 and the plurality of sub-functions respectively decrease.

Certainly, during actual implementation, the matching degree between the behavior record 1 and each sub-function may also be determined with reference to the use frequency and the latest use time. For example, the mobile phone may configure different weights for the use frequency and the latest use time, and maps the latest use time to a corresponding discrete value according to a time interval to which the latest use time belongs. In a process of determining the matching degree, the mobile phone may perform weighted summation on discrete values of the use frequency and the latest use time of the sub-function, to obtain the matching degree between the behavior record 1 and the sub-function.

For example, use frequencies and latest use time of the plurality of sub-functions of the camera are shown in the following Table 2:

**Table 2**

| Sub-function | Video recording | Night scene photographing | Time-lapse photographing | Portrait | Multi-lens video recording |
|---|---|---|---|---|---|
| Use frequency | 6 | 3 | 5 | 7 | 8 |
| Latest use time | June 10, 2023 | June 12, 2023 | June 05, 2023 | June 13, 2023 | June 14, 2023 |

In addition, a correspondence between a time interval to which the latest use time belongs and a discrete value is shown in the following Table 3:

**Table 3**

| Time interval (in a unit of day) | T≤1 | 1<T≤2 | 2<T≤3 | 3<T≤7 | 7<T |
|---|---|---|---|---|---|
| Discrete value | 5 | 4 | 3 | 2 | 1 |

An example in which the current time is June 14, 2023 is used. The last use time of the plurality of sub-functions in Table 2 may be respectively mapped to the following discrete values: 2, 3, 1, 4, and 5. An example in which a weight (denoted as k1) of the use frequency is 0.6, and a weight (denoted as k2) of the last use time is 0.4 is used. Calculation formulas and calculation results of matching degrees respectively between the behavior record 1 and the video recording, the night scene photographing, the time-lapse photographing, the portrait, and the multi-lens video recording are shown in the following Table 4:

**Table 4**

| Sub-function | Video recording | Night scene photographing | Time-lapse photographing | Portrait | Multi-lens video recording |
|---|---|---|---|---|---|
| Calculation formula | 6*0.6+2*0.4 | 3*0.6+3*0.4 | 5*0.6+1*0.4 | 7*0.6+4*0.4 | 8*0.6+5*0.4 |
| Setting value | 4.4 | 3 | 3.4 | 5.8 | 6.8 |

During actual implementation, the mobile phone may also combine at least two of the foregoing plurality of embodiments to determine a matching degree of each sub-function. For example, for any sub-function, weighted summation is performed on the matching degrees determined in the foregoing plurality of embodiments, to finally obtain the matching degree of the sub-function.

In some other embodiments, the mobile phone may save a selection operation performed by the user on each sub-function option each time after the hovering state is entered, and determine the matching degree of each sub-function based on saved data. For example, it is determined that a matching degree of a sub-function corresponding to a sub-function option selected after the hovering state is entered last time is the maximum. For another example, the matching degree of each sub-function is determined according to a quantity of times each sub-function option is selected after the hovering state is entered before. For example, a larger quantity of times a sub-function option is selected indicates a higher matching degree of a sub-function corresponding to the sub-function option. A smaller quantity of times a sub-function option is selected indicates a lower matching degree of a sub-function corresponding to the sub-function option.

After the matching degree of each sub-function is obtained according to the foregoing embodiments, the mobile phone may determine, according to the matching degree, a target area for displaying a card of each sub-function option.

In a specific implementation, an order of a plurality of areas may be configured in the mobile phone. Generally, an area whose size is larger and whose location is more centered on the second screen may be configured to be in an order ranking top, and an area whose size is smaller and whose location is closer to an edge location on the second screen may be configured to be in an order ranking bottom. In addition, an area is sequentially selected from the plurality of areas from the top to the bottom in descending order of the matching degrees after the matching degrees of the sub-functions are obtained, to obtain the target area for displaying the card of each sub-function.

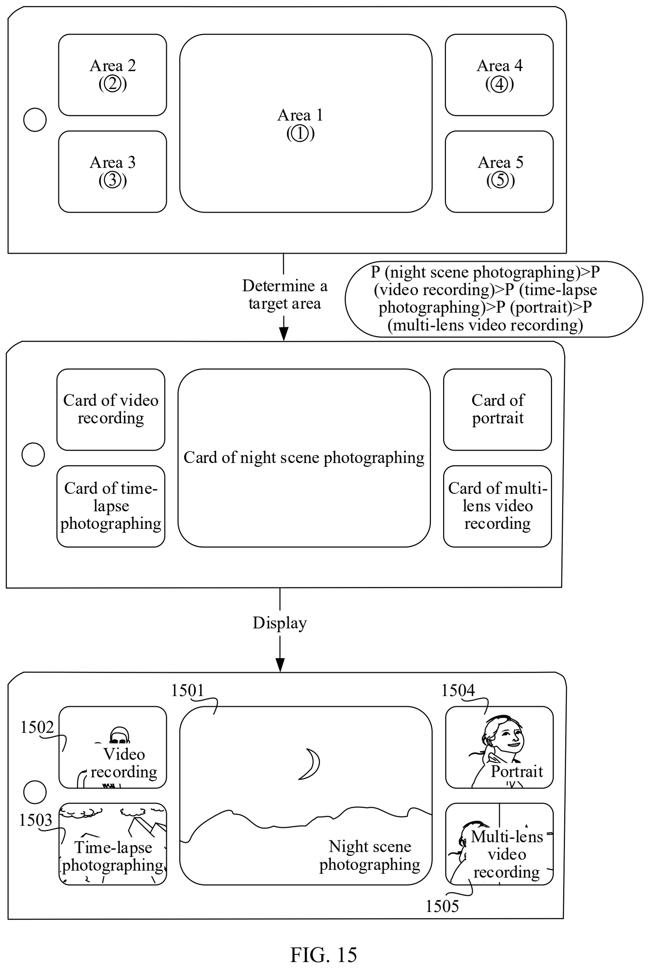

For example, the plurality of areas are an area 1 to an area 5 shown in FIG. 15. If a size of the area 1 is the largest and the area 1 is closest to a middle location of the second screen, a sequence number of the area 1 may be configured as ①. In addition, if sizes of an area 2 to the area 5 are the same, and distances respectively between the area 2 to the area 5 and the center of the second screen are the same, sequence numbers ② to ⑤ may be respectively configured for the area 2 to the area 5 in an order from left to right and from top to bottom. In addition, still referring to FIG. 15, if the matching degrees (denoted as P (the sub-functions)) of the night scene photographing, the video recording, the time-lapse photographing, the portrait, and the multi-lens video recording gradually decrease, it may be determined that target areas for displaying cards corresponding to sub-function options of the night scene photographing, the video recording, the time-lapse photographing, the portrait, and the multi-lens video recording are respectively an area 1, an area 2, an area 3, an area 4, and an area 5.

Finally, the mobile phone displays card content of a corresponding card in the target area. Still using FIG. 15 as an example, if the target areas for displaying the cards corresponding to the sub-function options of the night scene photographing, the video recording, the time-lapse photographing, the portrait, and the multi-lens video recording are respectively the area 1, the area 2, the area 3, the area 4, and the area 5, card content 1501 of the night scene photographing may be displayed in the area 1, card content 1502 of the video recording may be displayed in the area 2, card content 1503 of the time-lapse photographing may be displayed in the area 3, card content 1504 of the portrait may be displayed in the area 4, and card content 1505 of the multi-lens video recording may be displayed in the area 5.

In other words, one or more pieces of information of a real-time thing, time, a location, and a behavior record 1 that are included in an environment in which the mobile phone is located are different (the information is different, which may also be understood as scenes are different), and the areas for displaying the cards are different. That is, in a first scene, the plurality of cards are displayed in a plurality of first areas. In a second scene, the plurality of cards are displayed in a plurality of second areas. If the first scene is different from the second scene, the first area and the second area of at least one card are different.

The card content may include a schematic diagram of a scene that is suitable for being photographed by using a corresponding sub-function. For example, the card 1501 of the night scene photographing includes a schematic diagram of a scene, for example, a night scene, that is suitable for being photographed by using the night scene photographing. For another example, the card 1503 of the time-lapse photographing includes a schematic diagram of a scene, for example, a cloud, that is suitable for being photographed by using the time-lapse photographing function. Alternatively, the card content may further include an effect image photographed by using a corresponding sub-function. For example, the card 1505 of the multi-lens video recording includes an effect image of a video photographed by using the multi-lens video recording function, for example, an effect image obtained by collecting the portrait by using the front-facing camera and collecting the scenery by using the rear-facing camera.

After the mobile phone displays, according to the foregoing embodiments, the first screen and the second screen that correspond to the camera, namely, the current function option, in response to a selection operation performed by the user on any one of the plurality of sub-function options (which may also be referred to as a first photographing mode control) on the first screen, the mobile phone may display, on the second screen, a viewfinder area of a sub-function indicated by the sub-function option.

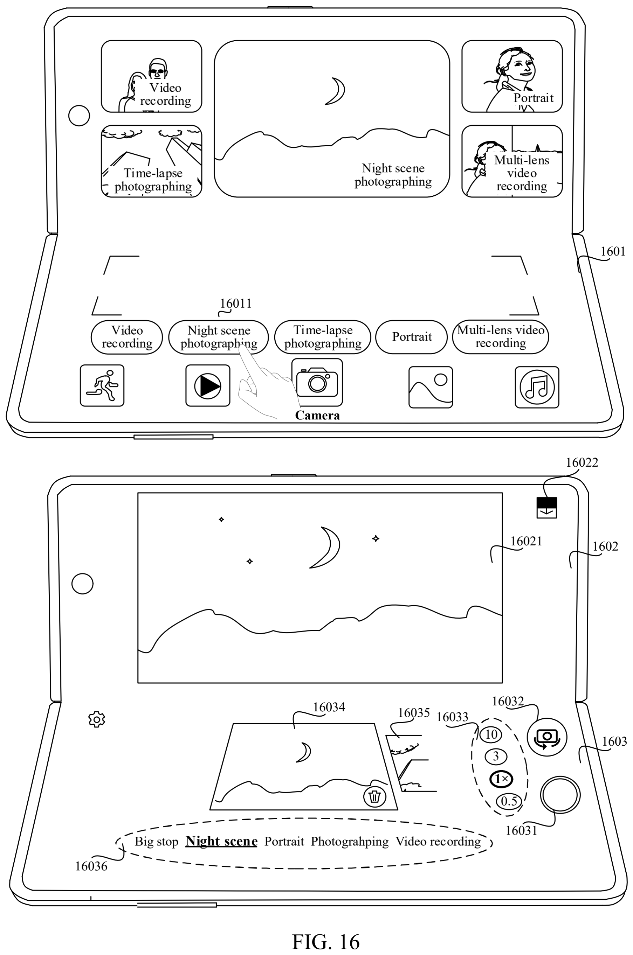

For example, any sub-function option is night scene photographing 16011 on a first screen 1601 shown in FIG. 16. In response to a selection operation performed by the user on the night scene photographing 16011 on the first screen 1601 shown in FIG. 16, the mobile phone may display a second screen 1602 shown in FIG. 16. The second screen 1602 includes a viewfinder area 16021 of the night scene photographing. The viewfinder area 16021 displays a real-time preview image collected by the camera by using the night scene photographing.

In this way, the mobile phone can quickly present a viewfinder box in a corresponding photographing mode based on a selection operation performed by the user on a photographing mode. A default viewfinder interface of the camera, such as a viewfinder interface of photographing or a viewfinder interface obtained when the camera (application) is exited last time, does not need to be displayed based on a tapping operation performed by the user first on an icon of the camera (application). Then, based on a selection operation performed by the user on an option (for example, an option of the night scene) of a corresponding sub-function on the default viewfinder interface, a viewfinder interface of the sub-function is displayed. In this way, man-machine interaction efficiency is improved.

For ease of description, an interface (for example, an interface displayed on the second screen 1602) displaying a viewfinder area may be referred to as a second interface when the current function option is the camera.

In addition, after the viewfinder box is displayed, in response to a return operation, the mobile phone may continue to display a plurality of function options and a plurality of sub-function options on the first screen, and display a plurality of cards on the second screen. That is, content displayed before the selection operation is performed on the sub-function option is returned to. For example, the return operation may be an operation of swiping right from a left edge of the first screen, or an operation of swiping right from a left edge of the second screen.

In addition, in response to the selection operation performed by the user on any one of the plurality of sub-function options (which may also be referred to as the first photographing mode control), the mobile phone may further provide a photographing operation control of a corresponding sub-function on the first screen. The photographing operation control is configured to trigger the mobile phone to adjust a photographing parameter of a sub-function and/or trigger the mobile phone to photograph an image.

Still using the example in FIG. 16, any sub-function option is night scene photographing 16011 on a first screen 1601 shown in FIG. 16. In response to a selection operation performed by the user on the night scene photographing 16011 on the first screen 1601 shown in FIG. 16, the mobile phone may display a first screen 1603 shown in FIG. 16. The first screen 1603 includes the photographing operation control of the night scene photographing, such as a photographing start control 16031, a camera flipping control 16032, and a zoom control 16033. The photographing start control 16031 is configured to trigger the mobile phone to photograph a night scene image. The camera flipping control 16032 is configured to trigger the mobile phone to switch a front-facing camera and a rear-facing camera. The zoom control 16033 is configured to trigger the mobile phone to adjust a focal length, for example, adjust the focal length to 0.5X, 1X, 3X, or 10X.

In some embodiments, in response to a selection operation performed by the user on any one of the plurality of sub-function options on the first screen, the mobile phone may further display photographed images, such as an image 16034 and an image 16035 on the first screen 1603 shown in FIG. 16 on the first screen. For ease of description, an interface (for example, an interface on the first screen 1603) displaying a photographed image may be referred to as an eighth interface.

In some embodiments, in response to the selection operation performed by the user on any one of the plurality of sub-function options on the first screen, the mobile phone may further provide a sub-function switching control on the first screen, for example, a control 16036 on the first screen 1603 shown in FIG. 16. In response to a switching operation performed by the user on a corresponding sub-function in the sub-function switching control, the mobile phone may also switch to a corresponding sub-function. After performing switching, the mobile phone may display, on the second screen, a viewfinder area of a switched sub-function, and display, on the first screen, a photographing operation control of the switched sub-function.

In practice, in the hovering state, the mobile phone may need to be used to photograph upward (for example, aligning a rear-facing camera at a back side of the second screen toward the sky to perform photographing). In this case, a folding angle between the first screen and the second screen is very small. If the real-time preview image is displayed on the second screen, it may be difficult for the user to view the real-time preview image.

Based on this, in some embodiments, in response to the selection operation performed by the user on any sub-function option, the mobile phone may further provide a switching control on the first screen or the second screen, to trigger the mobile phone to switch the real-time preview image on the second screen to the first screen for displaying. In response to a switching operation (such as a tapping operation or a touching-and-holding operation) performed by the user on the switching control, the mobile phone may switch the real-time preview image on the second screen to the first screen for displaying. Further, to enable the first screen to have enough space to display the real-time preview image, in response to the switching operation performed by the user on the switching control, the mobile phone may further switch some content on the first screen to the second screen for displaying. For example, the photographed image is switched to the second screen for displaying.

Still referring to the example in FIG. 16, the switching control is the control 16022 on the second screen 1602 shown in FIG. 16. In response to a tapping operation on the control 16022, the mobile phone may switch the viewfinder area 16021 on the second screen 1602 to the first screen 1603 for displaying, and switch the image 16034 and the image 16035 on the first screen 1603 to the second screen 1602 for displaying.

Function option 2: video viewing.

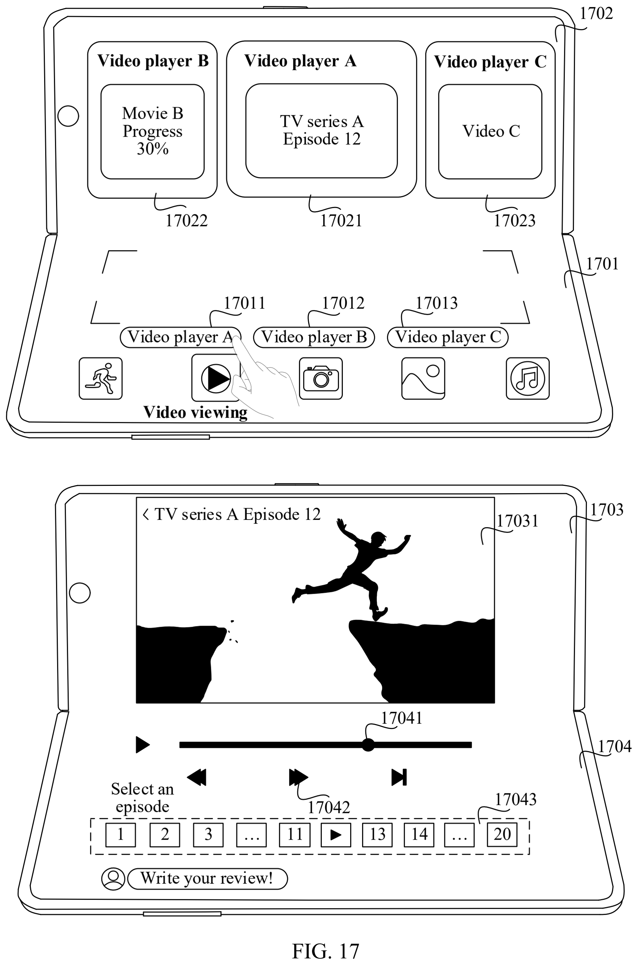

When the current function option is the video viewing, each of the plurality of sub-function options on the first screen may correspond to one video player in the mobile phone. For example, when the current function option is the video, the mobile phone may display a first screen 1701 and a second screen 1702 shown in FIG. 17. On the first screen 1701, a total of three sub-function options: a video player A 17011, a video player B 17012, and a video player C 17013 are displayed, which respectively correspond to three video players in the mobile phone. In addition, on the second screen 1702, three cards in one-to-one correspondence with three sub-function options are displayed, namely, a card 17021 corresponding to the video player A 17011, a card 17022 corresponding to the video player B 17012, and a card 17023 corresponding to the video player C 17013. For ease of description, when the currently selected function option is the video viewing, an interface (for example, an interface displayed on the first screen 1701) including a plurality of function options and a plurality of sub-function options may also be referred to as a third interface.

The following exemplarily describes specific implementation of displaying cards corresponding to the plurality of sub-function options on the first screen in a plurality of areas of the second screen.

When a plurality of areas (for example, three areas in the pattern 2 shown in FIG. 10) for video viewing are already configured in the mobile phone, after it is detected that the condition for entering the hovering state is satisfied, or in response to the current function option that is switched to being the video viewing, the mobile phone may determine, based on a behavior record 2 of the user in each video player, a target area for displaying a card of each sub-function option, and then display card content in the target area. The behavior record 2 includes a use frequency and/or latest use time of a video player within a time interval 3.

For example, the mobile phone may obtain the use frequency of each video player within the time interval 3, and determine, based on the use frequency, the target area for displaying the card of each sub-function option. A higher use frequency of the video player indicates that an area size of the target area is larger, and/or an area location is closer to a middle location of the second screen. A lower use frequency of the video player indicates that an area size of the target area is smaller, and/or an area location is closer to an edge location of the second screen. An example in which the time interval 3 is one week is used. The mobile phone may obtain a use frequency of each video player within one week. If a use frequency of the video player A is six times, and a use frequency of the video player B is ten times, the mobile phone may determine that an area size of a target area of a card displaying the video player A is larger, and/or the area location is closer to the middle location of the second screen. However, an area size of a target area of a card of the video player B is smaller, and/or the area location is closer to the edge location of the second screen.

For another example, the mobile phone may obtain latest use time of each video player, and determine, in reverse chronological order of the use time, that the area size of the target area for displaying the card of the video player gradually decreases, and/or the area location changes from the middle location to the edge location of the second screen.

Certainly, during actual implementation, the target area may also be determined with reference to the use frequency and the latest use time. For specific implementation, refer to descriptions of related parts in "Function option 1: camera" in the foregoing descriptions. Details are not described herein again.

After the target area for displaying the cards of the sub-function options is obtained according to the foregoing embodiments, the mobile phone may display card content in the target area. The card content may include an icon and a name of a corresponding video player. Further, the card content may further include indication information of a playing progress of the user in a corresponding video player. The indication information of the playing progress may include information such as a cover, a name, and a playing progress of a video (such as a movie, a TV series, and/or a short video) viewed in the video player. For example, the card 17021 of the video player A 17011 includes a name "TV series A" and a playing progress "episode 12" of a video; the card 17022 of the video player B 17012 includes a video name "movie B" and a playing progress "30%"; and the card 17023 of the video player C 17013 includes a name "video C" of a video.

After the mobile phone displays, according to the foregoing embodiments, the first screen and the second screen that correspond to the video viewing, namely, the current function option, in response to a selection operation performed by the user on any one (which may also be referred to as a second sub-option) of the plurality of sub-function options on the first screen, the mobile phone may display an application interface (which may also be referred to as a sixth interface) of a video player corresponding to the sub-function option on the second screen.

Further, in an embodiment in which the card includes the indication information of the playing progress, in response to the selection operation performed by the user on any one of the plurality of sub-function options on the first screen, the application interface of the video player displayed by the mobile phone on the second screen includes an image of a corresponding playing progress.

Still using the example in FIG. 17, any sub-function option is the video player A 17011 on the first screen 1701 shown in FIG. 17. In response to the selection operation performed by the user on the video player A 17011 on the first screen 1701 shown in FIG. 17, the mobile phone may display the second screen 1703 shown in FIG. 17. The second screen 1703 includes the application interface 17031 of the video player B. In addition, the application interface 17031 displays an episode image of the episode 12 of the TV series A. That is, the application interface 17031 includes an image of a playing progress corresponding to the " episode 12 of the TV A" in the card 17021.

In this way, the mobile phone may quickly present, based on the selection operation performed by the user on the sub-function option, a historically played video, and continue to play a video viewed last time.

In addition, in response to the selection operation performed by the user on any one of the plurality of sub-function options, the mobile phone may further provide a playback operation control of a corresponding video player on the first screen. The playback operation control is configured to trigger the mobile phone to adjust a playing progress, control start/pause playing, and the like.

Still using the example in FIG. 17, any sub-function option is the video player B 17012 on the first screen 1701 shown in FIG. 17. In response to the selection operation performed by the user on the video player B 17012 on the first screen 1701 shown in FIG. 17, the mobile phone may display the first screen 1704 shown in FIG. 17. The first screen 1704 includes a playback operation control of the video player B, such as a progress adjustment control 17041, a pause/play control 17042, and an episode selection control 17043. The progress adjustment control 17041 is configured to trigger the mobile phone to adjust the playing progress. The pause/play control 17042 is configured to trigger the mobile phone to control starting/pausing playing. The episode selection control 17043 is configured to trigger the mobile phone to switch episodes.

Function option 3: gallery.

In some embodiments, when the current function option is the gallery, the plurality of sub-function options on the first screen may correspond to images (for example, images or videos) and/or albums in the gallery. In this way, options of the images and/or the albums may be directly presented on the first screen, for the user to select the images and/or the albums to view.

Descriptions are provided below by using an example in which the plurality of sub-function options correspond to the plurality of images in the gallery.

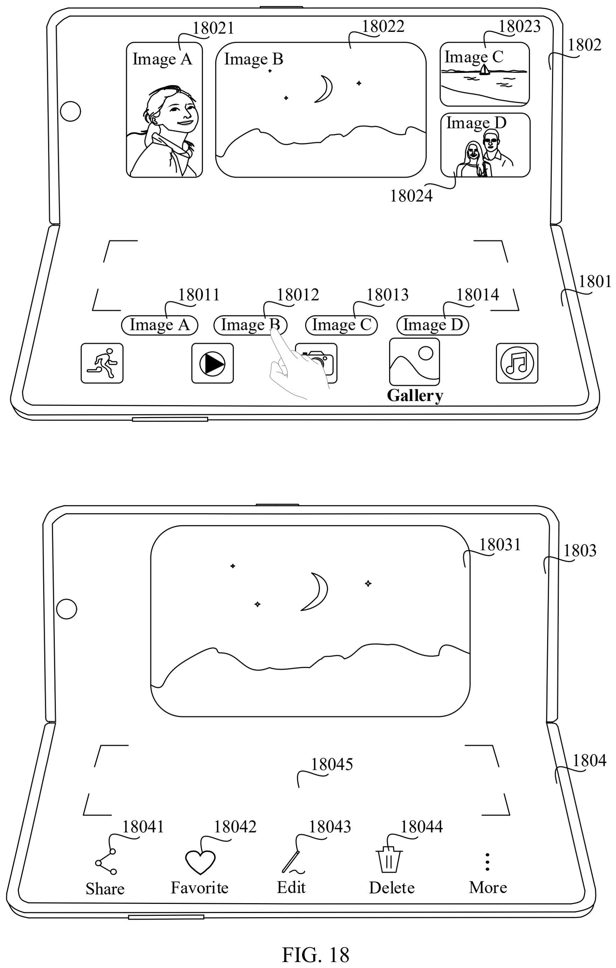

For example, when the current function option is the gallery, the mobile phone may display a first screen 1801 and a second screen 1802 shown in FIG. 18. A total of four sub-function options: an image A 18011, an image B 18012, an image C 18013, and an image D 18014 are displayed on the first screen 1801, and respectively correspond to functions of viewing the image A, the image B, the image C, and the image D. In addition, four cards in one-to-one correspondence with the four sub-function options are displayed on the second screen 1802, namely, a card 18021 corresponding to the image A 18011, a card 18022 corresponding to the image B 18012, a card 18023 corresponding to the image C 18013, and a card 18024 corresponding to the image D 18014.

It should be noted that, the image A, the image B, the image C, and the image D in FIG. 18 do not specifically refer to specific images in the gallery, but are merely used for distinguishing four images. For example, the image A always refers to an image corresponding to a thumbnail displayed close to a left edge of the second screen, and the image B always refers to an image corresponding to a thumbnail displayed at a middle location of the second screen.

The following exemplarily describes specific implementation of displaying cards corresponding to the plurality of sub-function options on the first screen in a plurality of areas of the second screen.

When a plurality of areas (for example, three areas in the pattern 2 shown in FIG. 10) of the gallery are already configured in the mobile phone, after it is detected that the condition for entering the hovering state is satisfied, or in response to switching to the current function option being the gallery, the mobile phone may select a preset quantity of target images from the gallery, and display cards of the target images in the plurality of areas based on a behavior record 3 of the user in the gallery and/or photographing time of the target images.

In a specific implementation, the mobile phone may select a preset quantity of target images based on the behavior record 3 of the user in the gallery. The behavior record 3 includes a quantity of times each image in the gallery is viewed by the user within a time interval 4 (for example, three days, one week, or one month), and/or last viewing time of each image in the gallery.

For example, the mobile phone may obtain the quantity of viewing times of each image in the gallery within the time interval 4, and determine the target image based on the quantity of viewing times. For example, a preset quantity of images whose viewing times rank top are selected as the target images.

For another example, the mobile phone may obtain last viewing time of each image in the gallery, and determine the target image based on the viewing time. For example, a preset quantity of images whose viewing time is closest to a current moment are selected as the target images.

In another specific implementation, the mobile phone may select a preset quantity of target images based on photographing time of the images in the gallery.

For example, the mobile phone may obtain the photographing time of the images and determine a preset quantity of images whose photographing time is closest to a current moment as the target images. Therefore, a plurality of images that are newly photographed are pushed to the user.

For another example, the mobile phone may obtain photographing time of the images and determine a preset quantity of images whose dates in the photographing time are the same as today as the target images. Therefore, images photographed on the same dates in previous years may be pushed to the user. For example, if today is June 20, 2023, a preset quantity of images whose dates are June 20 (for example, June 20, 2022 or June 20, 2021) in the photographing time may be selected from the gallery as the target images.

During actual implementation, the mobile phone may also combine at least two of the foregoing manners of selecting the target images.

After selecting the target images, the mobile phone may further determine, based on the behavior record 3 and/or the photographing time of the target images, the target area for displaying the cards of the target images.

In a specific implementation, the mobile phone determines, based on the quantity of viewing times, the target area for displaying the cards of the target images. A greater quantity of viewing times of the target images indicates that an area size of the target area is larger, and/or an area location is closer to a middle location of the second screen. A smaller quantity of viewing times of the target images indicates that an area size of the target area is smaller, and/or an area location is closer to an edge location of the second screen.

In another specific implementation, the mobile phone determines, based on the viewing time, the target area for displaying the cards of the target images. The later viewing time of the target images indicates that an area size of the target area is larger, and/or an area location is closer to a middle location of the second screen. The earlier viewing time of the target images indicates that an area size of the target area is smaller, and/or an area location is closer to an edge location of the second screen.

In another specific implementation, the mobile phone determines, based on the photographing time, the target area for displaying the cards of the target images. The later photographing time of the target images indicates that an area size of the target area is larger, and/or an area location is closer to a middle location of the second screen. The earlier photographing time of the target images indicates that an area size of the target area is smaller, and/or an area location is closer to an edge location of the second screen.

During actual implementation, the mobile phone may also combine at least two of the foregoing manners of determining the target area.

After the target area for displaying the cards of the target images is obtained in the foregoing manner, the mobile phone may display card content in the target area. The card content may include a thumbnail of a corresponding image. Further, the card content may further include a name of a sub-function option corresponding to the card. For example, a card 18021 includes text "the image A", a card 18022 includes text "the image B", a card 18023 includes text "the image C", and a card 18024 includes text "the image D". In this way, the mobile phone may prompt a correspondence between a card and a sub-function option, so that the user selects an image through the sub-function option.

After the mobile phone displays the first screen and the second screen that correspond to the gallery, namely, the current function option, in response to a selection operation performed by the user on any one (which may also be referred to as a second sub-option) of the plurality of sub-function options on the first screen, the mobile phone may display an image corresponding to the sub-function option on the second screen. For ease of description, an interface displaying the image corresponding to the sub-function option may be referred to as a sixth interface.

Still using the example in FIG. 18, any sub-function option is the image B 18012 on the first screen 1801 shown in FIG. 18. In response to the selection operation performed by the user on the image B 18012 on the first screen 1801 shown in FIG. 18, the mobile phone may display the second screen 1803 shown in FIG. 18. The second screen 1803 includes an image B 18031.

In this way, the mobile phone can quickly access the image based on the selection operation performed by the user on the sub-function option.

In addition, in response to the selection operation performed by the user on any one of the plurality of sub-function options, the mobile phone may further provide an image operation control of the target image on the first screen. The image operation control is configured to trigger the mobile phone to process an image.

Still using the example in FIG. 18, any sub-function option is the image B 18012 on the first screen 1801 shown in FIG. 18. In response to the selection operation performed by the user on the image B 18012 on the first screen 1801 shown in FIG. 18, the mobile phone may display the first screen 1804 shown in FIG. 18. The first screen 1804 includes image operation controls of the image B, such as a sharing control 18041, a favorite control 18042, an editing control 18043, and a deletion control 18044. The sharing control 18041 is configured to trigger the mobile phone to share the image B. The favorite control 18042 is configured to trigger the mobile phone to add the image B to favorites. The editing control 18043 is configured to trigger the mobile phone to edit the image B. The deletion control 18044 is configured to trigger the mobile phone to delete the image B.

It should be noted that, in another specific implementation of this embodiment, after the condition for entering the hovering state is satisfied, or in response to switching to the current function option being the gallery, the mobile phone may not display options of the plurality of target images in the gallery on the first screen, but display the cards of the plurality of target images on the second screen. Correspondingly, in response to a selection operation performed by the user on any card on the second screen, the mobile phone may also display a corresponding target image on the second screen and provide the image operation control of the target image on the first screen. In this way, a form may be consistent with a form in which in the gallery, image viewing is triggered by selecting a thumbnail, so that a trouble is not caused to the user, and man-machine interaction experience is improved.

Further, in response to the selection operation performed by the user on any one of the plurality of sub-function options, the mobile phone may further provide a touch area on the first screen, such as a touch area 18045 shown in FIG. 18, for swiping and switching the image displayed on the second screen.

In some other embodiments, when the current function option is the gallery, the plurality of sub-function options on the first screen may correspond to a plurality of menus in the gallery. For example, if the gallery includes a total of four menus: a photo, an album, a moment, and creation, the plurality of sub-function options may be four sub-function options corresponding to the four menus. In this way, options of the menu in the gallery may be directly presented on the first screen, for the user to select the menu for use.

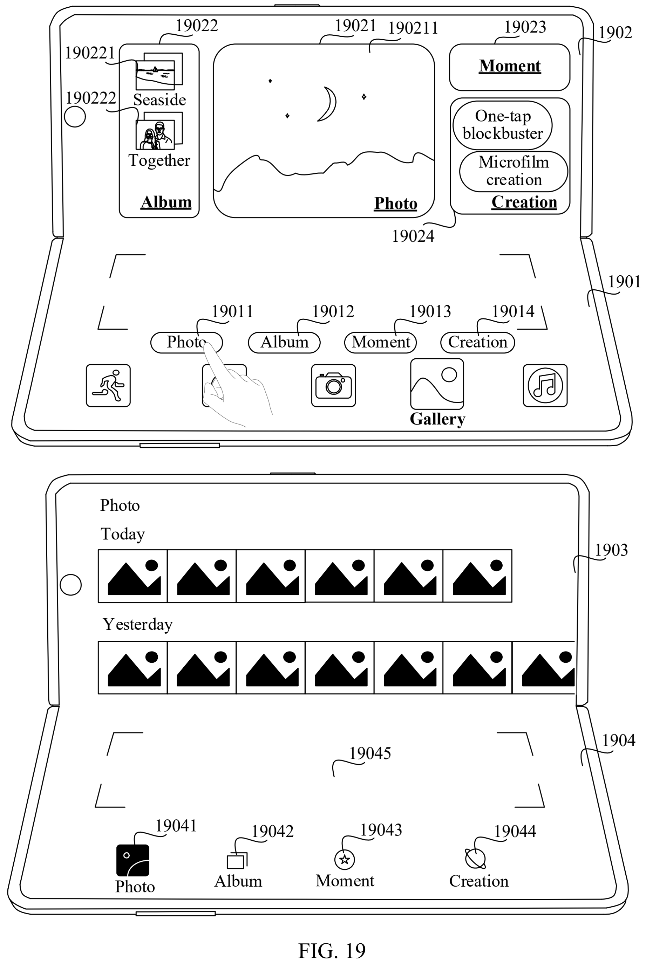

For example, when the current function option is the gallery, the mobile phone may display a first screen 1901 and a second screen 1902 shown in FIG. 19. On the first screen 1901, a total of four sub-function options: a photo 19011, an album 19012, a moment 19013, and creation 19014 are displayed, which respectively correspond to functions of entering four menu pages: a photo, an album, a moment, and creation in the gallery. In addition, four cards in one-to-one correspondence with the four sub-function options are displayed on the second screen 1902, namely, a card 19021 corresponding to the photo 19011, a card 19022 corresponding to the album 19012, a card 19023 corresponding to the moment 19013, and a card 19024 corresponding to the creation 19014.

The following exemplarily describes specific implementation of displaying cards corresponding to the plurality of sub-function options on the first screen in a plurality of areas of the second screen.

When a plurality of areas of the gallery are already configured in the mobile phone, after it is detected that the condition for entering the hovering state is satisfied, or in response to switching to the current function option being the gallery, the mobile phone may display cards of a plurality of menus in the plurality of areas.

In a specific implementation, the mobile phone may display the cards of the menus in a fixed area. For example, the card 19021 of the photo 19011, the card 19022 of the album 19012, the card 19023 of the moment 19013, and the card 19024 of the creation 19014 are all displayed according to a location relationship on the second screen 1902 shown in FIG. 19.

In another specific implementation, the mobile phone may also determine, based on a behavior record 4 of the user for the menus in the gallery, the target area for displaying the cards of the menus. The behavior record 4 includes a quantity of times each menu in the gallery is used by the user within a time interval 5 (for example, three days, one week, or one month), and/or latest access time of each menu in the gallery. Regarding this implementation, a principle and an implementation process of determining, based on the behavior record 3, the target area for displaying the cards of the target images are similar to those described above. For details, refer to descriptions in related parts above, and details are not described herein again.

After the target area for displaying the cards of the menus is obtained in the foregoing manner, the mobile phone may display card content in the target area. The card content may include names of the menus. For example, the card 19021, the card 19022, the card 19023, and the card 19024 respectively include the names of the menus: "photo", "album", "moment", and "creation". Further, the card content may further include information about menu content in the menus. For example, if the menu content in the photo is an image and/or a video, the card 19021 may further include a thumbnail 190211 of the image. For another example, if the menu content in the album is an album, the card 19022 may further include thumbnail information 190221 of the album "seaside" and thumbnail information 190222 of the album "together" in the mobile phone. For another example, if menu content that is being created is various image processing functions provided by the gallery, for example, processing functions such as one-tap blockbuster and micro-movie creation, the card 19024 may further include names of the image processing functions, such as "one-tap blockbuster" and "micro-movie creation". In this way, the mobile phone may prompt the menu content through cards.

After the mobile phone displays the first screen and the second screen that correspond to the gallery, namely, the current function option, in response to a selection operation performed by the user on any one (which may also be referred to as a second sub-option) of the plurality of sub-function options on the first screen, the mobile phone may display a menu page (which may also be referred to as a sixth interface) corresponding to the sub-function option on the second screen.

Still using the example in FIG. 19, any sub-function option is the photo 19011 on the first screen 1901 shown in FIG. 19. In response to the selection operation performed by the user on the photo 19011 on the first screen 1901 shown in FIG. 19, the mobile phone may display the second screen 1903 shown in FIG. 19. The second screen 1903 includes an image and/or a video included in a photo.

In this way, the mobile phone can quickly access the menus in the gallery based on the selection operation performed by the user on the sub-function option.

In addition, in response to the selection operation performed by the user on any one of the plurality of sub-function options, the mobile phone may further provide menu switching controls on the first screen. The menu switching controls are configured to switch the menus in the gallery.

Still using the example in FIG. 19, any sub-function option is the photo 19011 on the first screen 1901 shown in FIG. 19. In response to the selection operation performed by the user on the photo 19011 on the first screen 1901 shown in FIG. 19, the mobile phone may display the first screen 1904 shown in FIG. 19. The menu switching controls on the first screen 1904 include the photo 19041, the album 19042, the moment 19043, and the creation 19044. The photo 19041 is configured to trigger the mobile phone to switch to a "photo" menu in the gallery. The album 19042 is configured to trigger the mobile phone to switch to an "album" menu in the gallery. The moment 19043 is configured to trigger the mobile phone to switch to a "moment" menu in the gallery. The creation 19044 is configured to trigger the mobile phone to switch to a "creation" menu in the gallery.

Further, in response to the selection operation performed by the user on any one of the plurality of sub-function options, the mobile phone may further provide a touch area on the first screen, such as a touch area 19045 shown in FIG. 19, for swiping the photo displayed on the second screen.

Function option 4: music listening.

When the current function option is the music listening, each of the plurality of sub-function options on the first screen may correspond to one music player in the mobile phone, and cards corresponding to the plurality of sub-function options are displayed in a plurality of areas on the second screen. Card content of each card may include an icon and a name of a corresponding music player. Further, the card content may further include information about a playback record of the user in a corresponding music player. The information about the playback record may include information such as a cover, a name, and a playing progress of music played in the music player.

Similar to determining a target area for displaying each card in the foregoing "Function option 2: video viewing", the mobile phone may determine, based on a behavior record 4 of the user in each music player, the target area for displaying the card of each music player. For details, refer to related descriptions in the foregoing "Function option 2: video viewing", and details are not described herein again. The behavior record 4 includes a record such as a frequency of using each player by the user, and latest use time.

In addition, after the mobile phone displays the first screen and the second screen that correspond to the music listening, namely, the current function option, in response to a selection operation performed by the user on any one (which may also be referred to as a second sub-option) of the plurality of sub-function options on the first screen, the mobile phone may display an application interface (which may also be referred to as a sixth interface) of a music player corresponding to the sub-function option on the second screen. Further, in an embodiment in which the card content includes the indication information of the playing progress, in response to the selection operation performed by the user on any one of the plurality of sub-function options on the first screen, the application interface of the music player displayed by the mobile phone on the second screen includes an image of a corresponding playing progress.

Because both music and a video are multimedia files, "video viewing" and "music listening" may be collectively referred to as multimedia playback functions.

Function option 5: sports.

When the current function option is the sports, each of the plurality of sub-function options on the first screen may correspond to one exercise course in sports (application)/health (application), and cards corresponding to the plurality of sub-function options are displayed in a plurality of areas on the second screen. The card content of each card may include a cover and a name of the exercise course.

Similar to selecting the target image in the foregoing "Function option 3: gallery", the mobile phone may select a target course based on a behavior record 5 of the user for each exercise course in sports (application)/health (application). For details, refer to related descriptions in the foregoing "Function option 3: gallery". Details are not described herein again. The behavior record 5 includes records such as a learning frequency, accumulated learning duration, and latest learning time of the user for each exercise course in the sports (application)/health (application).

In addition, the mobile phone may also select a target course based on current time. For example, the current time is morning, and a course of oxic sports (such as yoga or fitness dancing) may be selected as the target course. For another example, if the current time is evening, a course of anoxic sports may be selected as the target course.

In addition, after the mobile phone displays the first screen and the second screen that correspond to the sports, namely, the current function option, in response to a selection operation performed by the user on any one (which may also be referred to as a second sub-option) of the plurality of sub-function options on the first screen, the mobile phone may play an exercise course corresponding to the sub-function option on the second screen. For ease of description, an interface displaying the exercise course corresponding to the sub-function option may be referred to as a sixth interface.

In addition, when cards corresponding to a plurality of sub-function options are displayed on the second screen, in response to a selection operation performed by the user on any card, the mobile phone may also display the interface of the sub-function on the second screen, and display an operation control of the sub-function on the first screen.

After entering the hovering state, in response to an event of exiting the hovering state, the mobile phone may exit the hovering state. For example, an interface before the hovering state is entered is displayed on the first screen and the second screen. In a specific implementation, the event of exiting the hovering state may be an event in which a folding angle changes out of a preset angle range. In another specific implementation, the event of exiting the hovering state may be an operation of exiting the hovering state that is performed by the user, such as a tapping operation on an exit button displayed in the hovering state. This is not specifically limited in this embodiment of this application.

An embodiment of this application further provides a chip system. The chip system includes at least one processor and at least one interface circuit. The processor may be connected to the interface circuit through a line. For example, the interface circuit may be configured to receive a signal from another apparatus (such as a memory of a terminal). For another example, the interface circuit may be configured to send a signal to another apparatus (for example, the processor). For example, the interface circuit may read instructions stored in the memory and send the instructions to the processor. The instructions, when executed by the processor, may enable the terminal to perform the steps in the foregoing embodiments. Certainly, the chip system may further include other discrete devices, which are not specifically limited in the embodiments of this application.

This embodiment further provides a computer-readable storage medium. The computer-readable storage medium stores computer instructions, and when the computer instructions are run on a terminal, the terminal is enabled to perform the functions or steps in the foregoing method embodiments.

This embodiment further provides a computer program product. When the computer program product is run on a computer, the computer is enabled to perform the functions or steps in the foregoing method embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus is run, the processor may execute the computer-executable instructions stored in the memory, to enable the chip to perform the functions or steps in the foregoing method embodiments.

The chip system, the computer-readable storage medium, the computer program product, or the apparatus provided in this embodiment is configured to perform a corresponding method provided above. Therefore, for beneficial effects that can be achieved by the chip system, the computer-readable storage medium, the computer program product, or the apparatus, refer to beneficial effects of the corresponding method provided above. Details are not described herein again.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that, the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate components may or may not be physically separate, and components displayed as units may be one or more physical units, may be located in one place, or may be distributed on different places. Some or all of the units may be selected according to actual requirements to achieve the objectives of the solutions in the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of this application, but not for limiting the technical solutions of this application. Although this application is described in detail with reference to the example embodiments, a person of ordinary skill in the art should understand that modifications or equivalent replacements may be made to the technical solutions of this application, without departing from the spirit and scope of the technical solutions of this application.

## Claims

1. A hovering display method, applied to an electronic device comprising a flexible foldable screen, wherein the flexible foldable screen comprises a first sub-screen and a second sub-screen, and the method comprises:
displaying, by the electronic device, a first interface on the first sub-screen when the electronic device is in a hovering state, wherein the first interface comprises a plurality of first options, the plurality of first options comprise an option of a camera that is in a selected state, the first interface further comprises a plurality of photographing mode controls of the camera, and each photographing mode control corresponds to one photographing mode provided by the camera; and
in response to a selection operation on a first photographing mode control in the plurality of photographing mode controls, displaying, by the electronic device, a second interface on the second sub-screen, wherein the second interface comprises a real-time preview image in a photographing mode corresponding to the first photographing mode control.

2. The method according to claim 1, wherein before the displaying, by the electronic device, a first interface on the first sub-screen, the method further comprises:
displaying, by the electronic device, a third interface, wherein the third interface comprises the plurality of first options, and the plurality of first options comprise an option of a multimedia playback function that is in the selected state and an option of the camera that is in an unselected state; and
the displaying, by the electronic device, a first interface on the first sub-screen comprises:
in response to a selection operation on the option of the camera in the plurality of first options, displaying, by the electronic device, the first interface on the first sub-screen.

3. The method according to claim 1 or 2, wherein the method further comprises:
entering, by the electronic device, the hovering state if an angle between the first sub-screen and the second sub-screen along a folding direction is a first angle in a process in which the flexible foldable screen is folded or unfolded, wherein
the first angle is within a first angle range; and the first angle is an angle at which stay duration exceeds first duration.

4. The method according to claim 3, wherein the entering, by the electronic device, the hovering state comprises:
when the electronic device is in a landscape state and/or the flexible foldable screen displays a desktop, entering, by the electronic device, the hovering state.

5. The method according to claim 3 or 4, wherein in the process in which the flexible foldable screen is folded or unfolded, if the angle between the first sub-screen and the second sub-screen along the folding direction is a second angle, and the electronic device is in a portrait state and/or the flexible foldable screen does not display the desktop, the electronic device does not enter the hovering state, wherein
the second angle is out of the first angle range; and/or, the stay duration of the first angle does not exceed the first duration.

6. The method according to any one of claims 1 to 5, wherein the method further comprises:
displaying, by the electronic device, a fourth interface on the second sub-screen when the electronic device displays the first interface on the first sub-screen and before the electronic device displays the second interface on the second sub-screen, wherein the fourth interface comprises at least two first cards, and each first card is used for recommending a photographing mode.

7. The method according to claim 6, wherein each first card comprises at least one of the following: a name of the photographing mode, a photographing effect image obtained by using the photographing mode, and a target object suitable for being photographed by using the photographing mode.

8. The method according to claim 6 or 7, wherein the fourth interface comprises a plurality of areas, and one first card is displayed in one area of the fourth interface;
in a first scene, a second card of the plurality of first cards is displayed in a first area of the plurality of areas; and
in a second scene, the second card is displayed in a second area of the plurality of areas, and the first area and the second area are different areas, wherein
the first scene and the second scene are different from each other in at least one of the following information: a real-time thing comprised in an environment in which the electronic device is located, time, a location, and a record of using the plurality of photographing modes by a user.

9. The method according to claim 8, wherein the real-time thing comprises a thing in an environment image collected by a camera of the electronic device.

10. The method according to any one of claims 1 to 9, wherein the plurality of first options further comprise options of at least one of the following functions provided by the electronic device: a gallery and sports, and each function has a plurality of sub-functions; and
after the displaying, by the electronic device, a first interface on the first sub-screen, the method further comprises:
in response to a selection operation on a second option of the plurality of first options, displaying, by the electronic device, a fifth interface on the first sub-screen, wherein the second option is any option of the plurality of first options other than the option of the camera, the fifth interface comprises the plurality of first options, the second option is in the selected state, the fifth interface further comprises a plurality of first sub-options, each first sub-option corresponds to one sub-function of a first function, and the first function is a function corresponding to the second option; and
in response to a selection operation on a second sub-option of the plurality of first sub-options, displaying, by the electronic device, a sixth interface on the second sub-screen, wherein the sixth interface is an interface of a sub-function corresponding to the second sub-option.

11. The method according to claim 10, wherein the second option is the option of the multimedia playback function, a plurality of sub-functions of the multimedia playback function are in one-to-one correspondence with a plurality of multimedia players in the electronic device, and interfaces of the sub-functions are interfaces of the corresponding multimedia players.

12. The method according to claim 10, wherein the second option is the option of the gallery;
a plurality of sub-functions of the gallery are in one-to-one correspondence with a plurality of images and/or albums in the gallery, and interfaces of the sub-functions are interfaces of the corresponding images and/or albums in the gallery; or
a plurality of sub-functions of the gallery are in one-to-one correspondence with a plurality of menu options provided by the gallery, and interfaces of the sub-functions are menu pages of the corresponding menu options.

13. The method according to claim 10, wherein the second option is the option of the sports, a plurality of sub-functions of the sports are in one-to-one correspondence with a plurality of sports courses, and interfaces of the sub-functions are interfaces of the corresponding sports courses.

14. The method according to any one of claims 2 to 13, wherein the selection operation on the option of the camera comprises a tapping operation or a touching-and-holding operation on the option of the camera; or the first interface comprises the first area, the first area is used by the electronic device to switch a selected first option, and the selection operation on the option of the camera comprises a swiping operation in the first area; and
the selection operation on the first photographing mode control comprises a tapping operation or a touching-and-holding operation on the first photographing mode control.

15. The method according to any one of claims 1 to 14, wherein in a vertical direction, a center of the first sub-screen is below a center of the second sub-screen; and
the displaying, by the electronic device, a first interface on the first sub-screen comprises:
displaying, by the electronic device, the first interface on the first sub-screen if the first sub-screen is a screen that is in the flexible foldable screen and that is at a back side of an outer screen.

16. The method according to claim 15, wherein the method further comprises:
displaying, by the electronic device, a seventh interface on the second sub-screen if the first sub-screen is a screen that is in the flexible foldable screen and that is at a back side of a rear-facing camera and when the electronic device is in the hovering state, wherein the seventh interface does not comprise the option of the camera.

17. The method according to any one of claims 1 to 16, wherein the method further comprises:
displaying, by the electronic device, an eighth interface on the first sub-screen when the electronic device displays the second interface on the second sub-screen, wherein the eighth interface comprises image information of an image that has been photographed by the electronic device.

18. The method according to claim 17, wherein the second interface or the eighth interface comprises a first control; and
the electronic device exchanges, in response to a preset operation performed by the user on the first control, display locations of the real-time preview image on the second interface and the image information of the photographed image on the eighth interface.

19. The method according to any one of claims 2 to 18, wherein the multimedia playback function comprises a music playback function or a video playback function.

20. A hovering display method, applied to an electronic device comprising a flexible foldable screen, wherein the flexible foldable screen comprises a first sub-screen and a second sub-screen, and the method comprises:
displaying, by the electronic device, a first interface on the first sub-screen when the electronic device is in a hovering state, wherein the first interface comprises a plurality of first options, the plurality of first options are in one-to-one correspondence with a plurality of functions provided by the electronic device, a second option of the plurality of first options is in a selected state, options other than the second option of the plurality of first options are in an unselected state, each function has a plurality of sub-functions, the first interface further comprises a plurality of first sub-options, the plurality of first sub-options are in one-to-one correspondence with a plurality of first sub-functions, and the plurality of first sub-functions are a plurality of sub-functions of a function corresponding to the second option;
displaying, by the electronic device, a second interface on the first sub-screen in response to a selection operation on a third option of the plurality of first options, wherein the second interface comprises the plurality of first options, the third option of the plurality of first options is in the selected state, options other than the third option of the plurality of first options are in the unselected state, the second interface further comprises a plurality of second sub-options, the plurality of second sub-options are in one-to-one correspondence with a plurality of second sub-functions, and the plurality of second sub-functions are a plurality of sub-functions of a function corresponding to the third option; and
in response to a selection operation on a third sub-option of the plurality of second sub-options, displaying, by the electronic device, a third interface on the second sub-screen, wherein the third interface comprises an interface of a sub-function corresponding to the third sub-option.

21. The method according to claim 20, wherein the method further comprises:
in response to the selection operation on the third sub-option of the plurality of second sub-options, displaying, by the electronic device, a fourth interface on the second sub-screen, wherein the fourth interface comprises at least two first cards, and each first card is used for recommending a photographing mode.

22. An electronic device, wherein the electronic device comprises a flexible foldable screen, a memory, and a processor, the flexible foldable screen comprises a first sub-screen and a second sub-screen, a display screen and the memory are coupled to the processor, wherein the memory stores computer program code, the computer program code comprises computer instructions, and when the computer instructions are executed by the processor, the electronic device is enabled to perform the method according to any one of claims 1 to 21.

23. A computer-readable storage medium, comprising computer instructions, wherein when the computer instructions are run on an electronic device, the electronic device is enabled to perform the method according to any one of claims 1 to 21.
